(19) **Europäisches Patentamt / European Patent Office / Office européen des brevets**

(11) **EP 3 779 116 B1**

(12) **EUROPEAN PATENT SPECIFICATION**

(45) Date of publication and mention
of the grant of the patent:
**07.02.2024 Bulletin 2024/06**

(21) Application number: **18911643.7**

(22) Date of filing: **21.12.2018**

(51) International Patent Classification (IPC):
*E21B 17/042* *(2006.01)*

(52) Cooperative Patent Classification (CPC):
**E21B 17/042; E21B 17/02;** G06F 30/23

(86) International application number:
**PCT/CN2018/122501**

(87) International publication number:
**WO 2019/184470 (03.10.2019 Gazette 2019/40)**

(54) **METHOD FOR DETERMINING MANUFACTURING PARAMETERS OF SEALING STRUCTURE OF OIL WELL PIPE JOINT, AND SEALING METHOD**

VERFAHREN ZUR BESTIMMUNG DER HERSTELLUNGSPARAMETER EINER DICHTUNGSSTRUKTUR EINER ÖLBOHRROHRVERBINDUNG UND DICHTUNGSVERFAHREN

PROCÉDÉ DE DÉTERMINATION DE PARAMÈTRES DE FABRICATION D'UNE STRUCTURE D'ÉTANCHÉITÉ D'UN RACCORD DE TIGE DE PUITS DE PÉTROLE, ET PROCÉDÉ D'ÉTANCHÉIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2018 CN 201810250603**

(43) Date of publication of application:
**17.02.2021 Bulletin 2021/07**

(73) Proprietors:
• **China National Petroleum Corporation**
**Beijing 100007 (CN)**
• **CNPC Tubular Goods Research Institute**
**Shaanxi 710065 (CN)**

(72) Inventors:
• **WANG, Xinhu**
**Beijing 100724 (CN)**
• **WANG, Jiandong**
**Beijing 100724 (CN)**
• **WANG, Peng**
**Beijing 100724 (CN)**
• **FENG, Chun**
**Beijing 100724 (CN)**
• **HAN, Lihong**
**Beijing 100724 (CN)**

(74) Representative: **Slingsby Partners LLP**
**1 Kingsway**
**London WC2B 6AN (GB)**

(56) References cited:
CN-A- 103 909 386    CN-A- 106 194 052
CN-A- 106 736 265    US-A1- 2017 314 371

**Description**

TECHNICAL FIELD

The present application belongs to the technical field of petroleum and natural gas drilling and exploitation, and particularly relates to a method for determining manufacturing parameters for a sealing structure of an oil well pipe connection, a sealing method, a sealing overlay layer and a method for designing an oil well pipe connection.

BACKGROUND

The oil well pipe is a special pipe for an oil and natural gas exploitation well, and is connected one by one through threaded connections to be lowered into an oil and gas well to form a string which is thousands of meters long. In the natural gas exploitation stage, high-pressure natural gas in the underground stratum is conveyed to the ground through the string, and high-pressure natural gas flows in the pipe, so that the threaded connection of the oil well pipe must have enough gas tightness.

In the prior art, a premium connection structure is mostly used in a sealing structure of an oil well pipe connection, and the premium connection structure of an oil well pipe consists of two parts, namely a threaded part and a sealing part. The sealing design of the premium connection adopts a contact compressive stress design approach, in which the radial interference contact fit of steel materials of the sealing surface is achieved through the fitting of sealing surfaces of the box threaded connection and the pin threaded connection in various shapes, such as a conical surface to a conical surface, a conical surface to a cylindrical surface, a conical surface to a spherical surface, a cylindrical surface to a spherical surface and the like, so that enough contact pressure is formed to play a sealing role. The premium connection oil well pipe connection structure is difficult to manufacture, high in precision requirement and small in elastic strain. If manufacturing deviation is too large, or if damage occurs, the sealing surfaces do not come into good contact. In the lowering process of an oil well pipe such as an tubing, a casing and the like, the oil well pipe may be blocked, and needs to be lifted up and lowered down for many times, or even rotated, then the threaded connections may loosen, resulting in leakage of oil well pipe connections. In the oil and gas production process, high-pressure gas flow causes vibration of a tubing string, and threads may loosen after long-term vibration, thus a small elastic strain cannot guarantee normal contact of sealing surface metal, compressive stress is reduced or even disappeared, and leakage of a threaded connection is caused. Therefore, there is an urgent need in the industry for a solution that can improve the reliability of the sealing of oil well pipe connection.

Prior art document CN103909386A provides a processing method for titanium alloy fuel pipe joints. The method includes the steps of external pulling or pulling-out, forming of coupling internal threads, processing of internal sealing faces, forming of pipe external threads, processing of external sealing faces and the like.

Prior art document CN106194052A discloses an oil well pipe metal to metal seal structure design philosophy.

SUMMARY

An objective of the present application is to provide a method for determining manufacturing parameters for a sealing structure of an oil well pipe connection, a sealing method, a design method, a sealing structure and a sealing apparatus, which improve the reliability of the sealing performance of the oil well pipe connection.

In an aspect, the present application provides a method for determining manufacturing parameters for a sealing structure of an oil well pipe connection, characterized by comprising:

determining a sealing surface contact compressive stress, a sealing structure material elastic strain, a sealing structure material strength and a sealing surface contact width of the oil well pipe by using a first formula based on a rule that a contact compressive stress parameter, an elastic strain parameter and a strength parameter of the oil well pipe are greater than or equal to a contact compressive stress safety margin, an elastic strain safety margin and a strength safety margin of the well oil pipe respectively, , wherein the contact compressive stress safety margin $k_{\sigma s} \geq 0.2$, the elastic strain safety margin $k_{\varepsilon s} \geq 0.2$, and the strength safety margin $k_{ys} \geq 0.2$, wherein the first formula is shown as follows:

$$\begin{cases} k_\sigma = \dfrac{\sigma_e - P}{P} \\[3mm] k_\varepsilon = \dfrac{\varepsilon_e - \delta}{\delta} \\[3mm] k_y = \dfrac{\sigma_y - \dfrac{PD}{2\pi L}}{\sigma_y} \end{cases}$$

wherein, $k_\sigma$ represents a contact compressive stress parameter, $\sigma_e$ represents a sealing surface contact compressive stress, $P$ represents a pressure of gas sealed in the pipe, $k_\varepsilon$ represents an elastic strain parameter, $\varepsilon_e$ represents an elastic strain of a sealing structure or a sealing surface material, $\delta$ represents a local clearance of a sealing surface, $k_y$ represents a strength parameter, $\sigma_y$ represents a yield strength of a sealing structure or a sealing surface material, $D$ represents a circumferential diameter of a sealing surface, and $L$ represents a sealing surface contact width;

determining an actual material of the sealing structure of the oil well pipe connection, based on the sealing surface contact compressive stress, the sealing structure material elastic strain, and the sealing structure material strength; and

determining a size of the sealing structure based on the elastic strain of the actual material and the sealing surface contact width and manufacturing the sealing structure by applying the actual material.

Further, in another embodiment of the method, determining the size of the sealing structure based on the elastic strain of the actual material and the sealing surface contact width and manufacturing the sealing structure by applying the actual material comprises:

including a sealing overlay layer in the sealing structure by
determining a thickness of the sealing overlay layer according to a second formula

$$\begin{cases} \theta = \dfrac{1}{2}(D_{ps} - d_{bs}) = \theta_e + \theta_s \\[2mm] \theta_e = \varepsilon_e t \\[2mm] \theta_s = \varepsilon_s D \end{cases};$$

determining a size of the sealing overlay layer based on the thickness of the sealing overlay layer and the sealing surface contact width; and

fabricating the sealing overlay layer with the actual material according to the size of the sealing overlay layer, wherein, $\theta$ represents a radial interference of the sealing surface, $D_{ps}$ represents an outer diameter of a sealing surface of a pin threaded connection, $d_{bs}$ represents an inner diameter of a sealing surface of a box threaded connection, $\theta_e$ represents a radial interference of the sealing structure made of the actual material, $\theta_s$ represents a radial deformation of a sealing structure of an original oil well pipe connection, $\varepsilon_e$ represents the elastic strain of the actual material, $t$ represents the thickness of the sealing overlay layer, $\varepsilon_s$ represents an elastic strain of an original connection material of the oil well pipe, and $D$ represents a circumferential diameter of the sealing surface, which is approximately equal to the average of the outer and inner diameters of oil well pipe connection.

Further, in another embodiment of the method, fabricating the sealing overlay layer with the actual material according to the size of the sealing overlay layer comprises:
fabricating the sealing overlay layer with the actual material according to the size of the sealing overlay layer employing any one of built-up welding, spraying, electroplating, and 3D printing.

Further, in another embodiment of the method, determining the size of the sealing structure based on the elastic strain of the actual material and the sealing surface contact width and manufacturing the sealing structure by applying the actual material comprises:

including a sealing ring in the sealing structure by
determining a thickness of the sealing ring and an outer diameter of the middle of the sealing ring according to a third formula

$$\begin{cases} \theta = \dfrac{1}{2}(D_{ps} - (d_{bs} - 2t)) = \theta_e + \theta_s \\ \theta_e = \varepsilon_e t \\ \theta_s = \varepsilon_s D \\ D_{s1} = d_{bs} \end{cases};$$

determining a size of the sealing ring based on the thickness of the sealing ring and the sealing surface contact width, the sealing structure of the connection includes a box threaded connection and a pin threaded connection; and fabricating the sealing ring with the actual material according to the size of the sealing ring,
wherein, $\theta$ represents a radial interference of the sealing surface, $D_{ps}$ represents an outer diameter of a sealing surface of a pin threaded connection, $d_{bs}$ represents an inner diameter of a sealing surface of a box threaded connection, $\theta_e$ represents a radial interference of the sealing structure made of the actual material, $\theta_s$ represents a radial deformation of a sealing structure of an original oil well pipe connection, $\varepsilon_e$ represents the elastic strain of the actual material, $t$ represents the thickness of the sealing ring, $\varepsilon_s$ represents an elastic strain of an original connection material of the oil well pipe, $D$ represents a circumferential diameter of the sealing surface, which is approximately equal to the average of the outer and inner diameters of oil well pipe connection, and $D_{s1}$ represents the outer diameter of the middle of the sealing ring.

Further, in another embodiment of the method, determining the size of the sealing structure based on the elastic strain of the actual material and the sealing surface contact width and manufacturing the sealing structure by applying the actual material comprises:

including a sealing ring in the sealing structure by
determining a thickness of the sealing ring according to a fourth formula

$$\begin{cases} \theta = t - h = \theta_e + \theta_s \\ \theta_e = \varepsilon_e t \end{cases};$$

determining a size of the sealing ring based on the thickness of the sealing ring and the sealing surface contact width; and
fabricating the sealing ring with the actual material according to the size of the sealing ring, and arranging the sealing ring in the torque shoulder clearance of the oil well pipe connection,
wherein, $\theta$ represents an interference of the sealing surface, $t$ represents the thickness of the sealing ring, $h$ represents a shoulder clearance of the oil well pipe connection, $\theta_e$ represents an interference of the sealing structure made of the actual material, $\theta_s$ represents an interference of a torque shoulder of an original oil well pipe connection, and $\varepsilon_e$ represents the elastic strain of the actual material.

Further, in another embodiment of the method, determining the size of the sealing structure based on the elastic strain of the actual material and the sealing surface contact width and manufacturing the sealing structure by applying the actual material comprises:

including a sealing ring in the sealing structure by determining a thickness of the sealing ring according to a fifth formula

$$\begin{cases} \theta = t - 2J = \theta_e + \theta_s \\ \theta_e = \varepsilon_e t \end{cases} ;$$

determining a size of the sealing ring based on the thickness of the sealing ring and the sealing surface contact width; and
fabricating the sealing ring with the actual material according to the size of the sealing ring,
wherein, $\theta$ represents an interference of the sealing surface, $t$ represents the thickness of the sealing ring, $J$ represents a half of the distance between ends of two pin threaded connections when a box threaded connection is tightened to the two pin threaded connections, $\theta_e$ represents an interference of the sealing structure made of the actual material, $\theta_s$ represents an interference of the pin threaded connections of an original oil well pipe, and $\varepsilon_e$ represents the elastic strain of the actual material.

Further, in another embodiment of the method, the elastic strain of the actual material is greater than 0.5%.
Further, in another embodiment of the method, the actual material comprises a superelastic metallic material having an elastic strain greater than 0.5%.
Further, in another embodiment of the method, the actual material comprises a shape memory alloy having a superelastic effect.
Further, in another embodiment of the method, the shape memory alloy has a reverse martensitic transformation finish temperature lower than a drill floor ambient temperature.
Further, in another embodiment of the method, the shape memory alloy meets the following conditions at drill floor ambient temperature:

a critical stress inducing martensitic transformation of the shape memory alloy is 20%-80% of a yield strength of a steel material of the oil well pipe; and
a maximum recoverable strain of the shape memory alloy is greater than 4%.

Further, in another embodiment of the method, the shape memory alloy meets the following conditions at downhole temperature:

a critical stress inducing martensitic transformation of the shape memory alloy is 20%-80% of a yield strength of a steel material of the oil well pipe; and
a maximum recoverable strain of the shape memory alloy is greater than 2%.

In another aspect, the present application provides a sealing overlay layer applied to an oil well pipe connection, characterized in that, the sealing overlay layer is manufacture by using the actual material that is determined by using the above mentioned method,
the actual material of the sealing overlay layer comprises a shape memory alloy having a superelastic effect.
In another aspect, the present application provides a sealing ring applied to an oil well pipe connection, wherein a tightness evaluation parameter of the sealing ring is greater than or equal to a corresponding tightness safety margin, the tightness evaluation parameter comprising a contact compressive stress parameter, an elastic strain parameter and a strength parameter, and the tightness safety margin comprising a contact compressive stress safety margin, an elastic strain safety margin and a strength safety margin; and wherein
the material of the sealing ring comprises a shape memory alloy having a superelastic effect.
In another aspect, the present application provides a method for sealing an oil well pipe connection, comprising:

determining manufacturing parameters for a sealing structure using the above method for determining manufacturing parameters for a sealing structure of an oil well pipe connection, obtaining the sealing structure, and sealing the oil well pipe connection by using the sealing structure.

Further, in another embodiment of the method, in the case that the sealing overlay layer fabricated according to the second formula is adopted, sealing the oil well pipe connection comprises:

determining, according to the second formula, an outer diameter of a sealing surface of a pin threaded connection and an inner diameter of a sealing surface of a box threaded connection, and determining the sealing structure of the oil well pipe connection based on the outer diameter of the sealing surface of the pin threaded connection and the inner diameter of the sealing surface of the box threaded connection, wherein the sealing structure comprises the box threaded connection and the pin threaded connection; and

arranging the sealing overlay layer on a sealing contact surface of the box threaded connection or the pin threaded connection to seal the oil well pipe connection.

Further, in another embodiment of the method, in the case that the sealing ring fabricated according to the third formula is adopted, sealing the oil well pipe connection comprises:

determining, according to the third formula, an outer diameter of a sealing surface of a pin threaded connection and an inner diameter of a sealing surface of a box threaded connection, and determining the sealing structure of the oil well pipe connection based on the outer diameter of the sealing surface of the pin threaded connection and the inner diameter of the sealing surface of the box threaded connection, wherein the sealing structure comprises the box threaded connection and the pin threaded connection; and

arranging the sealing ring in a gap between the threads of the box threaded connection and the pin threaded connection to seal the oil well pipe connection.

Further, in another embodiment of the method, in the case that the sealing ring fabricated according to the fourth formula is adopted, sealing the oil well pipe connection comprises:

determining, according to the fourth formula, a shoulder clearance of the oil well pipe connection, and determining the sealing structure of the oil well pipe connection based on the torque shoulder clearance of the oil well pipe connection, wherein the sealing structure comprises a box threaded connection and a pin threaded connection; and arranging the sealing ring in the torque shoulder clearance of the oil well pipe connection to seal the oil well pipe connection.

Further, in another embodiment of the method, in the case that the sealing ring fabricated according to the fifth formula is adopted, sealing the oil well pipe connection comprises:

determining the sealing structure of the oil well pipe connection based on a half of the distance between ends of two pin threaded connections when a box threaded connection is tightened to the two pin threaded connections according to the fifth formula, wherein the sealing structure comprises the box threaded connection and the pin threaded connection; and

arranging the sealing ring at a clearance between the ends of the two pin threaded connections after the box threaded connection is tightened to the two pin threaded connections, to seal the oil well pipe connection.

In another aspect, the present application provides a method for designing an oil well pipe connection, comprising: applying the actual material, the sealing structure material elastic strain, and the sealing surface contact width that are obtained by using the above method for determining manufacturing parameters for a sealing structure of an oil well pipe connection to design the sealing structure of the oil well pipe connection.

In another aspect, the present application provides a method for evaluating tightness of an oil well pipe connection, comprising:

acquiring a tightness evaluation parameter of the oil well pipe, the tightness evaluation parameter comprising a contact compressive stress parameter, an elastic strain parameter and a strength parameter, wherein

determining that the oil well pipe connection is sealed, if the contact compressive stress parameter, the elastic strain parameter and the strength parameter are all greater than zero; and

determining that the sealing of the oil well pipe connection fails, if at least one of the contact compressive stress parameter, the elastic strain parameter and the strength parameter is less than or equal to zero.

In another aspect, the present application also provides an apparatus for sealing an oil well pipe connection, comprising: a pin threaded connection, a box threaded connection and a sealing structure obtained by the above method for determining manufacturing parameters for a sealing structure of an oil well pipe connection, wherein the sealing structure is arranged at a seal between the pin threaded connection and the box threaded connection, and the sealing structure is made of the actual material.

According to the design and manufacturing method for the sealing structure of the oil well pipe connection, the sealing method, the tightness evaluation method, the sealing structure and the sealing apparatus provided by the present application, mechanical analysis such as contact compressive stress, elastic strain, strength and the like and analysis of tightness evaluation parameter and tightness safety margin are carried out on the sealing structure of the oil well pipe connection. It is proposed that the elastic strain of the sealing structure material should be greater than 0.5%, thereby the actual material of the sealing structure is selected, the size of the sealing structure is designed. By arranging the designed sealing structure at a seal of the oil well pipe connection, the sealing surface of the sealing structure of the oil well pipe connection provided by the present application can generate superelastic strain of more than 0.5%, thus the interference of the sealing surface of the oil well pipe connection can be improved, and the sealing reliability of the oil well pipe connection is further improved.

BRIEF DESCRIPTION OF DRAWINGS

In order to describe the technical solutions of the embodiments in the present disclosure or the prior art more clearly, the accompanying drawings for the embodiments or the prior art will be briefly introduced in the following. It is apparent that the accompanying drawings described in the following involve merely some embodiments provided in this disclosure, and those skilled in the art can derive other drawings from these accompanying drawings without creative efforts.

Figs. 1(a)-1(b) illustrate premium connection sealing structures for oil well pipes in the prior art;

Fig. 2 is a flow diagram of a method for sealing an oil well pipe connection according to an embodiment of the present application;

Fig. 3 is a schematic diagram showing a compressive stress distribution for a sealing surface of a threaded connection of an oil well pipe in the prior art;

Figs. 4(a)-4(d) are schematic diagrams showing a sealing structure for an oil well pipe connection with a sealing overlay layer according to an embodiment of the present application;

Figs. 5(a)-5(e) are schematic diagrams showing a sealing structure for an oil well pipe connection with a sealing ring according to an embodiment of the present application;

Figs. 6(a)-6(b) are schematic diagrams showing a sealing structure for an oil well pipe connection with a sealing ring at the shoulder according to an embodiment of the present application;

Fig. 7 is a schematic diagram showing a sealing structure for an oil well pipe with a sealing ring at a clearance between two pin threaded connection ends inside a box threaded connection according to an embodiment of the present application;

Fig. 8 is a schematic diagram showing a relationship between a percentage of a martensitic transformation of a shape memory alloy having a superelastic effect and temperature according to an embodiment of the present application;

Fig. 9 is a schematic diagram showing stress-induced martensitic transformation and reverse transformation of a shape memory alloy having a superelastic effect at various temperatures according to an embodiment of the present application;

Fig. 10 is a schematic diagram showing a stress-strain hysteresis loop of a shape memory alloy having a superelastic effect according to an embodiment of the present application.

DESCRIPTION OF EMBODIMENTS

In order to enable those skilled in the art to better understand the technical solutions in the present disclosure, the technical solutions of the embodiments in the present disclosure will be clearly and comprehensively described in the following with reference to the accompanying drawings. It is apparent that the embodiments as described are merely some, rather than all, of the embodiments of the present disclosure. All other embodiments obtained by those skilled in the art based on one or more embodiments described in the present disclosure without creative efforts should fall within the scope of this disclosure.

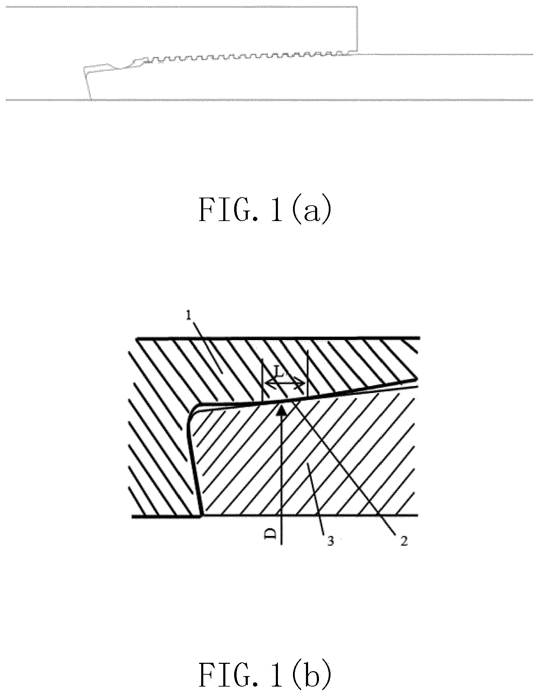

The oil well pipe may be used for oil and gas exploitation, transportation and the like. The sealing structure at the oil well pipe connection can generally adopt a threaded structure. Figs. 1(a)-1(b) illustrate premium connection sealing structures for oil well pipes in the prior art. Fig. 1(a) is a schematic diagram showing overall structure of the premium connection sealing structure of the oil well pipe in the prior art, and Fig. 1(b) is a schematic diagram showing partial structure of the premium connection sealing structure of the oil well pipe in the prior art. As shown in Fig. 1(b), a sealing surface contact width can be represented by *L*, and a sealing surface circumferential diameter can be represented by *D*. As shown in Fig. 1(b), a sealing design approach for a premium tubing or casing connection in the prior art is a contact compressive stress design approach, that is, a finite element simulation calculation approach is used for adjusting the shape, size of a sealing surface and the manufacturing deviation thereof, so that sufficient compressive stress and reasonable compressive stress distribution are generated on the sealing surface to realize gas sealing, and thus the shape, size of the sealing surface and manufacturing deviation thereof are designed. No matter how the shape and the size of the sealing surface are designed, the sealing principle is to form enough contact pressure by means of the radial interference contact fit of the metal of the sealing surface to achieve a sealing effect.

In the prior art, the diameter deviation of a sealing surface of a premium tubing or casing is generally controlled within ± 0.05 mm, and the out-of-roundness deviation is generally controlled within 0.5%. Therefore, the premium tubing or casing is difficult to manufacture with high requirements. Due to the fact that elastic strain of the metal of the sealing surface is small, if the manufacturing deviation is too large, the compressive stress of the sealing surface will be too small or too large. When the compressive stress is too small, a sealing failure may occur, and when the compressive stress is too large, plastic deformation will occur on the sealing surface, which will also lead to sealing failure.

According to the embodiments of the present application, a mechanical property analysis is carried out on the oil well pipe to obtain the stress, elasticity and strength parameters that can meet the tightness, select materials that meet the stress, elasticity and strength parameters, use the materials to manufacture the sealing structure, and arrange the manufactured sealing structure at the oil well pipe connection. By using the sealing structure made of the material, the elastic strain of the sealing contact surface is improved, so that the reliability of the sealing of oil well pipe connection is improved.

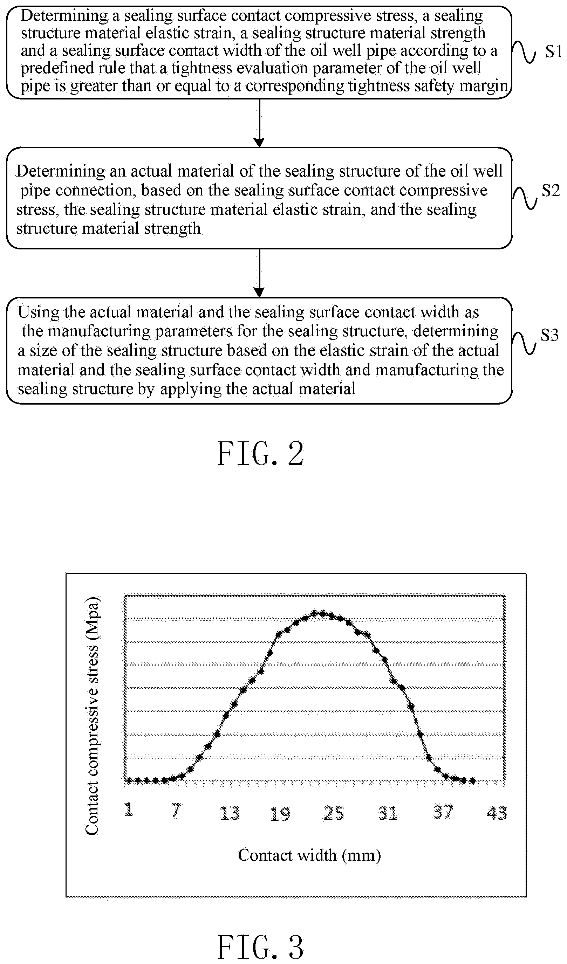

Specifically, Fig. 2 is a flow diagram of a method for manufacturing a sealing structure of an oil well pipe connection according to an embodiment of the present application. As shown in Fig. 2, a method for manufacturing a sealing structure of an oil well pipe connection provided by the present application comprises the following steps.

S1, determining a sealing surface contact compressive stress, a sealing structure material elastic strain, a sealing structure material strength and a sealing surface contact width of the oil well pipe according to a predefined rule that a tightness evaluation parameter of the oil well pipe is greater than or equal to a corresponding tightness safety margin, wherein the tightness evaluation parameter comprises a contact compressive stress parameter, an elastic strain parameter and a strength parameter, and the tightness safety margin comprises a contact compressive stress safety margin, an elastic strain safety margin and a strength safety margin.

The criterion in the prior art whether the sealing performance is good or not is the rationality of the distribution of the compressive stress of the sealing surface and the magnitude of the compressive stress value. The larger the compressive stress and the more rational the distribution are, the better the tightness is. Fig. 3 is a schematic diagram showing a compressive stress distribution for a sealing surface of a threaded connection of an oil well pipe in the prior art. As shown in Fig. 3, the distribution and magnitude of compressive stress of the sealing surface of the oil well pipe connection under various mechanical conditions are shown. The compressive stress in the middle of the sealing surface is the highest, which is close to the yield strength of a material, and the compressive stress at two ends of the sealing surface are gradually reduced and changing gently, which is basically reasonable. If the design value of the compressive stress of the sealing surface exceeds the yield strength of the material, plastic deformation of the sealing surface material can occur, and the tightness will be influenced. In the implementation process of the embodiment of the present application, the applicant finds that since the threaded connection of the existing oil well pipe is made of steel materials, and the elastic strain of the steel materials is less than 0.2%, so that the metal interference of the sealing surface is very small, and many factors can cause the matching of the sealing surface to fail, resulting in insufficient sealing reliability of the threaded connection of the oil well pipe.

According to the embodiments of the present application, the tightness evaluation parameter of the oil well pipe can be obtained by analyzing the mechanical properties of the oil well pipe and the sealing structure of the oil well pipe connection. The tightness evaluation parameter can comprise a contact compressive stress parameter $k_\sigma$, an elastic strain parameter $k_\varepsilon$ and a strength parameter $k_y$. The contact compressive stress parameter $k_\sigma$ can reflect the magnitude of the contact compressive stress on the sealing surface of the sealing structure of the oil well pipe connection, and the contact compressive stress parameter $k_\sigma$ can be obtained by analyzing the compressive stress of the sealing surface of the sealing structure of the oil well pipe connection. The elastic strain parameter $k_\varepsilon$ can reflect magnitude of the elastic strain of the sealing structure or the sealing material of the oil well pipe connection, and the elastic strain parameter $k_\varepsilon$ of the oil well pipe can be obtained by analyzing the elastic strain of the sealing surface of the sealing structure of the oil well pipe connection. The strength parameter $k_y$ can reflect magnitude of the strength of the sealing structure of the oil well pipe connection, and the strength parameter $k_y$ of the oil well pipe can be obtained by analyzing the structural strength of the sealing surface of the sealing structure of the oil well pipe connection. The contact compressive stress parameter $k_\sigma$, elastic strain parameter $k_\varepsilon$, and strength parameter $k_y$ may be equations, models, or other representations.

The tightness safety margin of oil well pipe can be determined empirically or by experiment. The tightness safety margin can include: a contact compressive stress safety margin $k_{\sigma s}$, an elastic strain safety margin $k_{\varepsilon s}$ and a strength safety margin $k_{ys}$. The magnitude of the tightness safety margin can reflect the minimum contact compressive stress, elastic strain, structural strength and the like for the oil well pipe connection to ensure reliable sealing. The tightness safety margin of the sealing structure of the oil well pipe connection can be determined according to the sealing reliability requirement and experience, or by sealing simulation experiments and the like.

According to an embodiment of the present application, the tightness safety margin can be determined through experiments or experience as follows: contact compressive stress safety margin $k_{\sigma s} \geq 0.2$, elastic strain safety margin $k_{\varepsilon s} \geq 0.2$, and strength safety margin $k_{ys} \geq 0.2$.

The greater the contact compressive stress parameter $k_{\sigma}$ (i.e. the higher the contact compressive stress of the sealing surface), the higher the sealing reliability. When the contact compressive stress parameter $k_{\sigma}$ is larger than the corresponding contact compressive stress safety margin $k_{\sigma s}$, for example $k_{\sigma} \geq k_{\sigma s} = 0.2$ , certain sealing reliability can be ensured. Of course, a higher value for $k_{\sigma s}$ may be chosen, such as 0.5, or even 2.0, 3.0, etc., if sealing reliability is required to be higher.

The greater the elastic strain parameter $k_{\varepsilon}$ (i.e. the greater the elastic strain of the sealing surface material), or the smaller the manufacturing deviation, roughness and various damages, the higher the sealing reliability. A certain sealing reliability can be ensured when $k_{\varepsilon}$ is greater than the elastic strain safety margin $k_{\varepsilon s}$, for example $k_{\varepsilon} \geq k_{\varepsilon s} = 0.2$, that is, when the elastic strain of the sealing surface material is significantly larger than the manufacturing deviation or the service damage size of the sealing surface. In the prior art, a strain factor is not considered in a sealing design approach for a premium connection of an oil well pipe, so that the elastic strain of a sealing structure material of a sealing surface is too small to block a leakage channel. A higher value for $k_{\varepsilon s}$, e.g. 1.0, 2.0 etc. may be chosen if the sealing reliability is required to be higher.

Likewise, the greater the strength parameter $k_y$ (i.e. the higher the strength of the sealing surface material), the higher the sealing reliability. When the strength parameter $k_y$ is greater than the corresponding strength safety margin $k_{ys}$, for example $k_y \geq k_{ys} = 0.2$ , certain sealing reliability can be guaranteed. Of course, higher values for $k_{ys}$ may be chosen if sealing reliability is required to be higher.

In an embodiment of the present application, the tightness evaluation parameter can be determined using the following formula:

$$\begin{cases} k_{\sigma} = \dfrac{\sigma_e - P}{P} \\[2em] k_{\varepsilon} = \dfrac{\varepsilon_e - \delta}{\delta} \\[2em] k_y = \dfrac{\sigma_y - \dfrac{PD}{2\pi L}}{\sigma_y} \end{cases} \qquad \text{Formula 1.}$$

In above formula, $k_{\sigma}$ may represent the contact compressive stress parameter; $\sigma_e$ may represent the contact compressive stress of the sealing surface in MPa, which is generally less than the yield deformation stress of the metal; $P$ may represent the pressure of the gas sealed in the pipe in MPa; $k_{\varepsilon}$ may represent the elastic strain parameter; $\varepsilon_e$ may represent the elastic strain of sealing structure or sealing surface material in % or mm, which is generally controlled within the elastic deformation range of the metal; $\delta$ may represent a local clearance of the sealing surface in % or mm, which may represent a local clearance of the sealing surface caused by the roughness, defects and damages of the sealing surface, the out-of-roundness and diameter deviation of a sealing structure, thread loosening during service and the like; $k_y$ may represent the strength parameter; $\sigma_y$ may represent a yield strength of the sealing structure or the sealing surface material in MPa; $D$ may represent a circumferential diameter of the sealing surface in mm; and $L$ may represent the sealing surface contact width in mm.

After the tightness evaluation parameter and the tightness safety margin of the oil well pipe are determined, make the tightness evaluation parameter greater than or equal to the corresponding tightness safety margin, then the value ranges of the sealing surface contact compressive stress $\sigma_e$, the elastic strain of sealing structure material $\varepsilon_e$, the strength of sealing structure material $\sigma_y$ and the sealing surface contact width $L$ of the sealing structure of the oil well pipe connection that meet the tightness requirement can be determined.

S2, determining an actual material of the sealing structure of the oil well pipe connection, based on the sealing surface contact compressive stress, the sealing structure material elastic strain, and the sealing structure material strength.

The sealing surface contact compressive stress $\sigma_e$, the sealing structure material elastic strain $\varepsilon_e$ and the sealing structure material strength $\sigma_y$ may represent the mechanical property requirements on the contact compressive stress, the elastic strain, the strength and the like of the sealing structure material, and the actual materials which can meet the mechanical property requirements are selected as the materials for manufacturing the sealing structure of the oil well pipe connection. The actual material used can meet the mechanical property requirement of the sealing structure of the oil well pipe connection, so that the tightness of the oil well pipe connection can be further ensured.

Using above-mentioned formula (1) and the tightness safety margin obtained, e.g. $k_\varepsilon = \dfrac{\varepsilon_e - \delta}{\delta} \geq 0.2$, according to the manufacturing level and the service damage condition of the sealing structure of premium tubing or casing, that is, the local clearance $\delta$ of the sealing surface reaches at least 0.2% or 0.5%, it can be obtained that the value range of the sealing structure material elastic strain $\varepsilon_e$ of the sealing surface material of the oil well pipe connection in an embodiment of the present application should be greater than 0.5%, even greater than 2%, 5%, etc. to meet the safety and reliability requirements. This elastic strain is much larger than that of the sealing structure of the current premium tubing or casing.

The process of determining the strength of sealing material $\sigma_y$ can be expressed as:

$$k_y = \frac{\sigma_y - \dfrac{PD}{2\pi L}}{\sigma_y} \geq k_{ys} = 0.2$$

. The larger the $k_{ys}$, the greater the yield strength of the sealing surface material $\sigma_y$ or the wider the sealing surface contact width $L$, so that the shear stress experienced by the sealing material under the internal pressure of the gas in the pipe can be ensured to be less than the yield strength of the material. However, if $L$ is too large, the sealing surfaces are more susceptible to adhesive wear during the make-up of the oil well pipe connection. For example, when the gas pressure $P$ in the pipe is 100 MPa and the yield strength of the P110 grade steel pipe material $\sigma_y$=758MPa, it can be calculated that the sealing surface width $L$ of the 88.9 mm tubing connection should reach 2.4 mm, the sealing surface contact width $L$ of the 139.7 mm casing connection should reach 3.5 mm, and the sealing surface contact width $L$ of the 177.8 mm tubing connection should reach 4.4 mm. According to the formula (1) and the tightness safety margin, by reasonably setting the sealing surface contact width $L$, the yield strength requirement that the material of the oil well pipe connection sealing structure needs to meet can be reasonably selected.

According to the formula 1 and the tightness safety margin, the design value of the sealing structure material elastic strain $\varepsilon_e$ of the oil well pipe connection obtained in an embodiment of the present application should be greater than 0.5%, even greater than 2%, 5%, etc. to meet the safety and reliability requirements. The elastic strain of the steel material of the current oil well pipe is less than 0.2%, thus the superelastic design of the sealing structure may not be realized.

On the basis of above-described embodiment, in an embodiment of the present application, the actual material can be a metal material with superelastic properties, and a superelastic metal material with an elastic strain greater than 0.5% can be selected. Superelasticity can indicate the phenomenon that the strain can automatically recover when unloading, that is, there is an elastic potential energy function for the material, which is a scalar function of strain tensor, and its derivative to a strain component is a corresponding stress component. Stress and strain are no longer linearly related, but correspond one to one in the form of elastic energy function. The superelastic metal material means that the elastic strain is greater than that of the steel material. The metal material with the superelastic properties is selected to manufacture the sealing structure, so that the elastic strain of the sealing structure of the oil well pipe connection can be improved, and the reliability of the sealing of the oil well pipe connection can be further improved.

In an embodiment of the present application, a shape memory alloy having a superelastic effect may be selected for the actual material. The shape memory alloy is an alloy material which can completely eliminate deformation thereof at a lower temperature after being heated and warmed and recover the original shape thereof before being deformed, namely an alloy with a memory effect. Some shape memory alloys not only have a good shape memory effect, but also have superelasticity, and some shape memory alloys have a superelastic property under certain conditions. By selecting the shape memory alloy with the superelastic properties, the manufactured sealing structure can be ensured to have higher elastic strain, so that the interference of the sealing surface of the sealing structure of the oil well pipe connection is improved, various leakage channels are effectively blocked, and the reliability of the sealing of the oil well pipe connection is improved.

S3, using the actual material and the sealing surface contact width as the manufacturing parameters for the sealing structure, determining a size of the sealing structure based on the elastic strain of the actual material and the sealing surface contact width.

The actual material and the sealing surface contact width can be used as manufacturing parameters for the sealing structure. The size of the sealing structure can be determined based on the obtained sealing surface contact width $L$ and the elastic strain of the actual material. Then the actual material can be used for manufacturing the sealing structure according to the determined size of the sealing structure. For example, a shape memory alloy having superelasticity may be selected as the actual material to manufacture the sealing structure of the oil well pipe connection. The manufactured sealing structure may be arranged at the seal of the oil well pipe connection, such as at the sealing surface of the threaded connection of the oil well pipe or at the torque shoulder of the threaded connection, etc.

According to the sealing method for the oil well pipe connection provided by the present application, mechanical analysis such as contact compressive stress, elastic strain and strength is carried out on the sealing structure of the oil well pipe connection, the material and the size of the sealing structure are designed, and the designed sealing structure is arranged at the seal of the oil well pipe connection. The material and the size of the sealing structure can meet the mechanical requirements for the tightness of the oil well pipe connection. The sealing surface of the oil well pipe connection with the sealing structure can generate great elastic strain, the interference of the sealing surface of the oil well pipe connection can be improved, and the sealing reliability of oil well pipe connection is improved.

On the basis of above-described embodiment, in an embodiment of the present application, determining the size of the sealing structure based on the elastic strain of the actual material and the sealing surface contact width and manufacturing the sealing structure by applying the actual material may comprise:

including a sealing overlay layer in the sealing structure. A thickness of the sealing overlay layer may be determined according to the following formula

$$\begin{cases} \theta = \dfrac{1}{2}(D_{ps} - d_{bs}) = \theta_e + \theta_s \\ \theta_e = \varepsilon_e t \\ \theta_s = \varepsilon_s D \end{cases} \qquad \text{Formula 2;}$$

determining a size of the sealing overlay layer based on the thickness of the sealing overlay layer and the sealing surface contact width; and
fabricating the sealing overlay layer with the actual material according to the size of the sealing overlay layer.

In the above formula, $\theta$ may represent a radial interference of the sealing surface, $D_{ps}$ may represent an outer diameter of a sealing surface of a pin threaded connection, $d_{bs}$ may represent an inner diameter of a sealing surface of a box threaded connection, $\theta_e$ may represent a radial interference of the sealing structure made of the actual material, $\theta_s$ may represent a radial deformation of a sealing structure of an original oil well pipe connection, $\varepsilon_e$ may represent the elastic strain of the actual material, $t$ may represent the thickness of the sealing overlay layer, $\varepsilon_s$ may represent an elastic strain of an original connection material of the oil well pipe, and $D$ may represent a circumferential diameter of the sealing surface, which is approximately equal to the average of the outer and inner diameters of oil well pipe connection.

An embodiment of the present application also provides a method for sealing an oil well pipe connection, and the oil well pipe connection can be sealed by using the sealing structure manufactured according to the above embodiments.

According to an embodiment of the present application, in the case that the sealing overlay layer fabricated according to the formula 2 is adopted, sealing the oil well pipe connection comprises:

determining, according to the formula 2, an outer diameter of a sealing surface of a pin threaded connection and an inner diameter of a sealing surface of a box threaded connection, and determining the sealing structure of the oil well pipe connection based on the outer diameter of the sealing surface of the pin threaded connection and the inner diameter of the sealing surface of the box threaded connection, wherein the sealing structure comprises the box threaded connection and the pin threaded connection; and
arranging the sealing overlay layer on a sealing contact surface of the box threaded connection or the pin threaded connection to seal the oil well pipe connection.

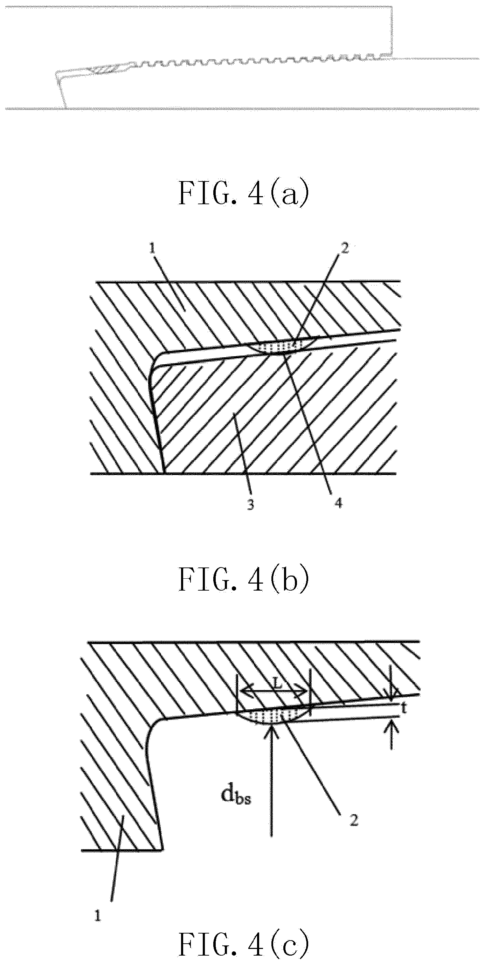

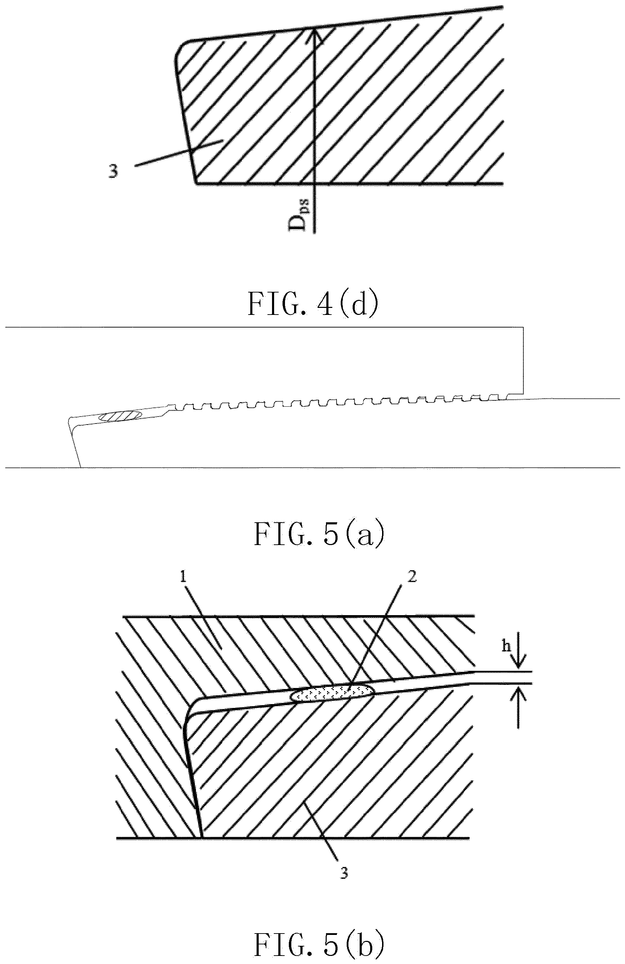

Specifically, Figs. 4(a)-4(d) are schematic diagrams showing structure of an oil well pipe connection with a sealing overlay layer according to an embodiment of the present application. Fig. 4(a) can represent a schematic diagram showing overall structure of the oil well pipe connection with a sealing overlay layer, Fig. 4(b) can represent a schematic diagram showing assembly of the box and pin threaded connection of oil well pipe, Fig. 4(c) can represent a schematic diagram showing structure of the box threaded connection of oil well pipe, and Fig. 4(d) can represent a schematic diagram showing structure of the pin threaded connection of oil well pipe. In Figs. 4(a)-4(d), the reference number 1 can represent the box threaded connection, 2 can represent the sealing overlay layer, 3 can represent the pin threaded connection, 4 may represent the sealing surface, $t$ may represent the thickness of the sealing overlay layer, $L$ may represent the sealing surface contact width, $d_{bs}$ may represent the inner diameter of the sealing surface of the box threaded connection, and $D_{ps}$ may represent the outer diameter of the sealing surface of the pin threaded connection. The box threaded connection, pin threaded connection, sealing surface, etc. of the sealing structure of the oil well pipe connection are shown in Figs. 4(a) to 4(d). According to an embodiment of the present application, the sealing overlay layer can be arranged at the sealing surface of the oil well pipe connection, the material of the sealing overlay layer can be the actual material, and sizes of the sealing overlay layer and the sealing structures of the oil well pipe connection, such as the box threaded connection, the pin threaded connection and the like can be calculated by the above formula 2.

Specifically, according to the above embodiment, the value of the elastic strain $\varepsilon_e$ of the actual material in the sealing structure of the oil well pipe connection can be obtained, the elastic strain $\varepsilon_s$ of the original connection material of the oil well pipe can be obtained according to the mechanical property of the original material of the oil well pipe, and the average $D$ of the outer diameter and the inner diameter of the oil well pipe connection can be obtained according to the size of the oil well pipe connection. Further, the thickness $t$ of the sealing overlay layer, the outer diameter $D_{ps}$ of the sealing surface of the pin threaded connection and the inner diameter $d_{bs}$ of the sealing surface of the box threaded connection of the oil well pipe that meet the above formula 2 can be determined, and the size of the sealing structure of the oil well pipe connection and the size of the sealing overlay layer can be obtained.

For example, in an embodiment of the present application, $\varepsilon_e$ = 2% ~ 5% and $\varepsilon_s$ = 0.2% may be taken. If the average $D$ of the outside diameter and the inside diameter of the oil well pipe connection is 114 mm, and the design value of the thickness of the sealing overlay layer $t$=1.0 ~ 5.0mm, it may be calculated that 0=0.25 ~ 0.50mm, and the outside diameter $D_{ps}$ of the sealing surface of the pin threaded connection and the inside diameter $d_{bs}$ of the sealing surface of the box threaded connection can be determined according to the formula 2.

After the sizes of the sealing structure of the oil well pipe connection and of the sealing overlay layer are determined, the manufacturing deviation of the thickness $t$ of the sealing overlay layer, the outer diameter $D_{ps}$ of the sealing surface of the pin threaded connection and the inner diameter $d_{bs}$ of the sealing surface of the box threaded connection can be determined by using a finite element mechanical simulation method. It is possible to use materials such as shape memory alloys to make the sealing overlay layer according to the size of the sealing overlay layer obtained, such as the thickness $t$ of the sealing overlay layer and the sealing surface contact width $L$, and arrange the sealing overlay layer on the surface of the sealing structure of the oil well pipe connection. As shown in Figs. 4(b)-4(c), the sealing overlay layer may be arranged on the inner surface of sealing position of the box threaded connection of the oil well pipe or on the outer surface of the ends of pin threaded connection.

The shape of the sealing surface, the axial position of the sealing surface, the outer diameter $D_{ps}$ of the sealing surface of the pin threaded connection, other sizes of the sealing structure, form and size of thread and the like in the embodiment of the present application can be the same as those of the existing premium tubing or casing connection. The embodiment of the present application can be implemented on the basis of the existing premium connection, the inner diameter $d_{bs}$ of the sealing surface of the box threaded connection, the thickness $t$ of the sealing overlay layer and the radial interference $\theta$ of the sealing surface can be redesigned, and the sizes of other structures can be unchanged. Easier operation and wider applicability can be achieved, and by arranging the sealing overlay layer at the seal of the oil well pipe connection, the elastic strain at the seal of the oil well pipe connection can be improved, and the reliability of the sealing of the oil well pipe connection is further improved.

In an embodiment of the present application, the surface of the sealing structure of the oil well pipe connection can be overlaid with the actual material determined based on mechanical property analysis of oil well pipe, by employing one of built-up welding, spraying, electroplating, 3D printing (also referred to as three-dimensional printing) and the like, to form a sealing overlay layer at the seal of the oil well pipe connection. Then a simple structure and convenient operation can be achieved.

On the basis of above-described embodiment, in an embodiment of the present application, determining the size of the sealing structure based on the elastic strain of the actual material and the sealing surface contact width and manufacturing the sealing structure by applying the actual material may comprise:

including a sealing ring in the sealing structure. A thickness of the sealing ring and an outer diameter of the middle of the sealing ring may be determined according to the following formula

$$
\begin{cases}
\theta = \dfrac{1}{2}(D_{ps} - (d_{bs} - 2t)) = \theta_e + \theta_s \\
\theta_e = \varepsilon_e t \\
\theta_s = \varepsilon_s D \\
D_{s1} = d_{bs}
\end{cases}
\qquad \text{Formula 3;}
$$

determining a size of the sealing ring based on the thickness of the sealing ring and the sealing surface contact width; and

fabricating the sealing ring with the actual material according to the size of the sealing ring.

In the above formula, $\theta$ may represent a radial interference of the sealing surface, $D_{ps}$ may represent an outer diameter of a sealing surface of a pin threaded connection, $d_{bs}$ may represent an inner diameter of a sealing surface of a box threaded connection, $\theta_e$ may represent a radial interference of the sealing structure made of the actual material, $\theta_s$ may represent a radial deformation of a sealing structure of an original oil well pipe connection, $\varepsilon_e$ may represent the elastic strain of the actual material, $t$ may represent the thickness of the sealing ring, $\varepsilon_s$ may represent an elastic strain of an original connection material of the oil well pipe, $D$ may represent a circumferential diameter of the sealing surface, which is approximately equal to the average of the outer and inner diameters of oil well pipe connection, and $D_{s1}$ may represent the outer diameter of the middle of the sealing ring.

An embodiment of the present application also provides a method for sealing an oil well pipe connection. In the case that the sealing ring fabricated according to the formula 3 is adopted, sealing the oil well pipe connection comprises:

determining, according to the formula 3, an outer diameter of a sealing surface of a pin threaded connection and an inner diameter of a sealing surface of a box threaded connection, and determining the sealing structure of the oil well pipe connection based on the outer diameter of the sealing surface of the pin threaded connection and the inner diameter of the sealing surface of the box threaded connection, wherein the sealing structure comprises the box threaded connection and the pin threaded connection; and

arranging the sealing ring in a gap of the sealing part between the box threaded connection and the pin threaded connection, that is, removing the original sealing structure, forming the gap at the original sealing structure, installing the sealing ring to replace the original sealing structure, to seal the oil well pipe connection.

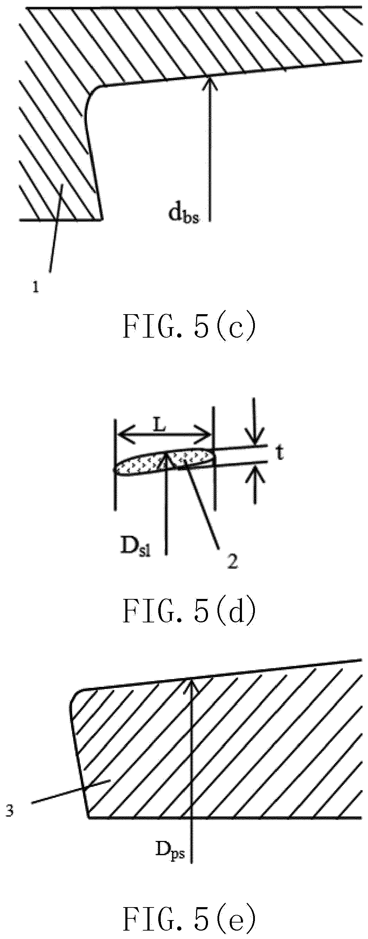

Specifically, Figs. 5(a)-5(e) are schematic diagrams showing a sealing structure for an oil well pipe connection with a sealing ring according to an embodiment of the present application. Fig. 5(a) can represent a schematic diagram showing overall structure of the oil well pipe connection with a sealing ring, Fig. 5(b) can represent a schematic diagram showing assembly of the box and pin threaded connection of oil well pipe, Fig. 5(c) can represent a schematic diagram showing structure of the box threaded connection of oil well pipe, Fig. 5(d) can represent a schematic diagram showing structure of the sealing ring, and Fig. 5(e) can represent a schematic diagram showing structure of the pin threaded connection of oil well pipe. In Figs. 5(a)-5(e), the reference number 1 can represent the box threaded connection, 2 can represent the sealing ring, 3 can represent the pin threaded connection, $L$ may represent the sealing surface contact width, $t$ may represent the thickness of the sealing ring, $h$ may represent the gap in which the sealing ring is mounted (i.e. the gap formed by removing an original sealing structure for mounting the sealing ring, which is equal to half the difference between the internal diameter $d_{bs}$ of the sealing surface of the box threaded connection and the external diameter $D_{ps}$ of the sealing surface of the pin threaded connection), $d_{bs}$ may represent the inner diameter of the sealing surface of the box threaded connection, $D_{ps}$ may represent the outer diameter of the sealing surface of the pin threaded connection, $D_{s1}$ may represent the outer diameter of the middle of the sealing ring, which may be equal to the inner diameter $d_{bs}$ of the sealing surface of the box threaded connection. As shown in Figs. 5(a)-5(e), the sealing ring can be arranged at the seal of the oil well pipe connection, the material of the sealing ring can be the actual material, and sizes of the sealing ring and the sealing structures of the oil well pipe connection, such as the box threaded connection, the pin threaded connection and the like can be calculated by the above formula 3.

Specifically, according to the above embodiment, the value of the elastic strain $\varepsilon_e$ of the actual material in the sealing structure of the oil well pipe connection can be obtained, the elastic strain $\varepsilon_s$ of the original connection material of the oil well pipe can be obtained according to the mechanical property of the original material of the oil well pipe, and the average $D$ of the outer diameter and the inner diameter of the oil well pipe connection can be obtained according to the size of the oil well pipe connection. Further, the thickness $t$ of the sealing ring, the outer diameter $D_{ps}$ of the sealing surface of the pin threaded connection, the inner diameter $d_{bs}$ of the sealing surface of the box threaded connection and the outer diameter $D_{s1}$ of the middle of the sealing ring of the oil well pipe that meet the above formula 3 can be determined.

For example, in an embodiment of the present application, $\varepsilon_e$ = 2% ~ 5% and $\varepsilon_s$ = 0.2% may be taken. If the average $D$ of the outside diameter and the inside diameter of the oil well pipe connection is 114 mm, and the design value of the thickness of the sealing ring $t$=5.0 ~ 10.0mm, it may be calculated that $\theta$ = 0.33~0.73$mm$, and the outside diameter $D_{ps}$ of the sealing surface of the pin threaded connection, the inside diameter $d_{bs}$ of the sealing surface of the box threaded connection and the outer diameter $D_{s1}$ of the middle of the sealing ring can be determined according to the formula 3.

After the sizes of the sealing structure of the oil well pipe connection and of the sealing ring are determined, the manufacturing deviation of the thickness $t$ of the sealing ring, the outer diameter $D_{ps}$ of the sealing surface of the pin threaded connection, the inner diameter $d_{bs}$ of the sealing surface of the box threaded connection and the outer diameter $D_{s1}$ of the middle of the sealing ring can be determined by using a finite element mechanical simulation method. It is possible to use materials such as shape memory alloys to make the sealing ring according to the size of the sealing ring obtained, such as the thickness $t$ of the sealing ring, the sealing surface contact width $L$ and the outer diameter $D_{s1}$ of the middle of the sealing ring, and arrange the sealing ring at the seal of the oil well pipe connection. As shown in Figs. 5(a)-5(b), the sealing ring may be arranged in a gap of the sealing part between the box threaded connection and the pin threaded connection of the oil well pipe.

The position for placing the sealing ring in the embodiment of the present application can be the same as the design position of the sealing surface of the existing oil well pipe connection. The embodiment of the present application can be implemented on the basis of the existing premium connection, the original design sealing structure is removed, the sealing surface contact width $L$, the size of the sealing ring and the radial interference $\theta$ of the sealing surface are redesigned, and the shape and the size of other structures can be unchanged. Easier operation and wider applicability can be achieved, and by arranging the sealing ring having a superelastic effect at the seal of the oil well pipe connection to replace the original sealing structure made of steel material, the elastic strain at the seal of the oil well pipe connection can be improved, and the reliability of the sealing of the oil well pipe connection is further improved.

On the basis of above-described embodiment, in an embodiment of the present application, determining the size of the sealing structure based on the elastic strain of the actual material and the sealing surface contact width and manufacturing the sealing structure by applying the actual material may comprise:

including a sealing ring in the sealing structure. A thickness of the sealing ring may be determined according to the following formula

$$\begin{cases} \theta = t - h = \theta_e + \theta_s \\ \theta_e = \varepsilon_e t \end{cases} \qquad \text{Formula 4;}$$

determining a size of the sealing ring based on the thickness of the sealing ring and the sealing surface contact width; and
fabricating the sealing ring with the actual material according to the size of the sealing ring.

In the above formula, $\theta$ may represent an interference of the sealing surface, $t$ may represent the thickness of the sealing ring, $h$ may represent a shoulder clearance of the oil well pipe connection, $\theta_e$ may represent an interference of the sealing structure made of the actual material, $\theta_s$ may represent an interference of a torque shoulder of an original oil well pipe connection, and $\varepsilon_e$ may represent the elastic strain of the actual material.

An embodiment of the present application also provides a method for sealing an oil well pipe connection. In the case that the sealing ring fabricated according to the formula 4 is adopted, sealing the oil well pipe connection comprises:

determining, according to the formula 4, a shoulder clearance of the oil well pipe connection, and determining the sealing structure of the oil well pipe connection based on the shoulder clearance of the oil well pipe connection, wherein the sealing structure comprises a box threaded connection and a pin threaded connection; and arranging the sealing ring at the torque shoulder position of the oil well pipe connection to seal the oil well pipe connection.

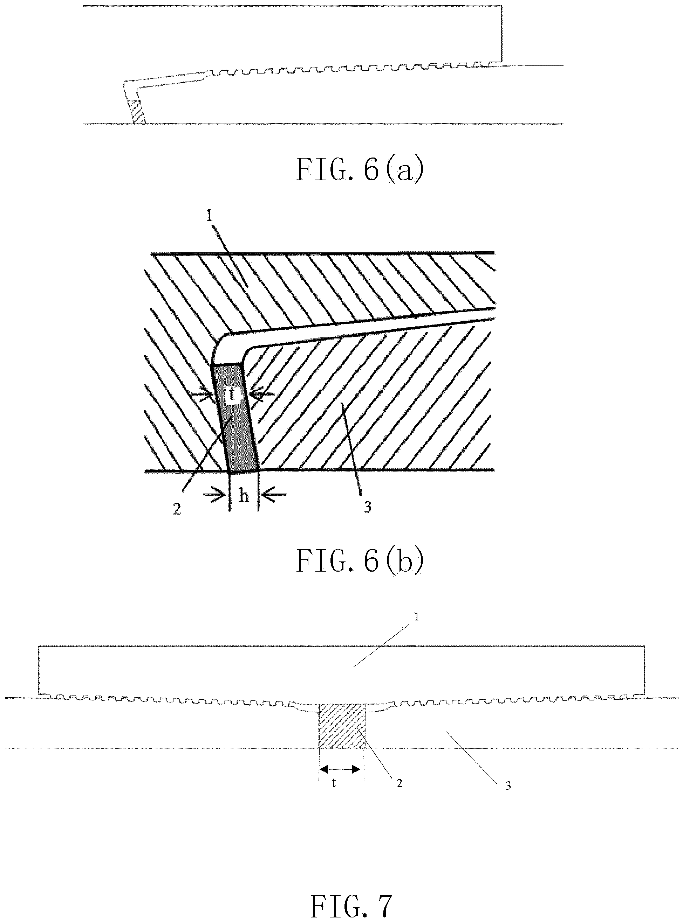

Specifically, Figs. 6(a)-6(b) are schematic diagrams showing a sealing structure for an oil well pipe connection with a sealing ring at the shoulder according to an embodiment of the present application. Fig. 6(a) can represent a schematic diagram showing overall structure of the oil well pipe connection with a sealing ring at the shoulder, and Fig. 6(b) can represent a schematic diagram showing partial structure of the seal of the oil well pipe connection with a sealing ring at the shoulder. In Figs. 6(a)-6(b), the reference number 1 can represent the box threaded connection, 2 can represent the sealing ring, 3 can represent the pin threaded connection, $t$ may represent the thickness of the sealing ring, and $h$ may represent the clearance between the sealing ring and the shoulder. As shown in Figs. 6(a)-6(b), the sealing ring can be arranged at the seal of the oil well pipe connection, the material of the sealing ring can be the actual material, and sizes of the sealing ring and the sealing structures of the oil well pipe connection, such as the box threaded connection, the pin threaded connection and the like can be calculated by the above formula 4.

Specifically, according to the above embodiment, the value of the elastic strain $\varepsilon_e$ of the actual material in the sealing structure of the oil well pipe connection can be obtained. The interference of the torque shoulder of the original steel material connection without the sealing ring can be represented by $\theta_s$, which can be obtained according to actual experience or experiments, for example $\theta_s = 0.2 \sim 0.5mm$. Furthermore, the thickness $t$ of the sealing ring of the oil well pipe and the shoulder clearance A of the oil well pipe connection meeting the above formula 4 can be determined.

For example, in an embodiment of the present application, $\varepsilon_e = 2\% \sim 5\%$ and $\theta_s = 0.2 \sim 0.5mm$ may be taken. If the design value of the thickness of the sealing ting $t = 5.0 \sim 10.0mm$, it may be calculated that $\theta = 0.30 \sim 1.00mm$, and the shoulder clearance $h$ of the oil well pipe connection can be determined according to the formula 4.

After the sizes of the sealing structure of the oil well pipe connection and of the sealing ring are determined, the manufacturing deviation of the thickness $t$ of the sealing ring, the shoulder clearance $h$ of the oil well pipe connection can be determined by using a finite element mechanical simulation method. It is possible to use materials such as shape memory alloys to make the sealing ring according to the size of the sealing ring obtained, such as the thickness $t$ of the sealing ring and the sealing surface contact width $L$, and arrange the sealing ring at the seal of the oil well pipe connection. As shown in Figs. 6(a)-6(b), the sealing ring may be arranged at the torque shoulder position of the oil well pipe connection.

The method for arranging the sealing ring at the torque shoulder of the oil well pipe connection in an embodiment of the present application can be used in combination with the method for arranging the sealing ring between the threads of the box and pin threaded connections of the oil well pipe in Figs. 5(a)-5(e). Easier operation and wider applicability can be achieved, and by arranging the sealing ring at the seal of the oil well pipe connection, the elastic strain at the seal of the oil well pipe connection can be improved, and the reliability of the sealing of the oil well pipe connection is further improved.

On the basis of above-described embodiment, in an embodiment of the present application, determining the size of the sealing structure based on the elastic strain of the actual material and the sealing surface contact width and manufacturing the sealing structure by applying the actual material may comprise:

including a sealing ring in the sealing structure. A thickness of the sealing ring may be determined according to the following formula

$$\begin{cases} \theta = t - 2J = \theta_e + \theta_s \\ \theta_e = \varepsilon_e t \end{cases} \qquad \text{Formula 5;}$$

determining a size of the sealing ring based on the thickness of the sealing ring and the sealing surface contact width; and fabricating the sealing ring with the actual material according to the size of the sealing ring.

In the above formula, $\theta$ may represent an interference of the sealing surface, $t$ may represent the thickness of the sealing ring, $J$ may represent a half of the distance between ends of two pin threaded connections when a box threaded connection (i.e. coupling) is tightened to the two pin threaded connections, that is, the distance from the center of the coupling to the end of the pin threaded connection after tightening the oil well pipe connection specified in the relevant standards, $\theta_e$ may represent an interference of the sealing structure made of the actual material, $\theta_s$ may represent an interference of the pin threaded connections of an original oil well pipe, and $\varepsilon_e$ may represent the elastic strain of the actual material.

An embodiment of the present application also provides a method for sealing an oil well pipe connection. In the case that the sealing ring fabricated according to the formula 5 is adopted, sealing the oil well pipe connection comprises:

determining the sealing structure of the oil well pipe connection based on a half of the distance between ends of two pin threaded connections when a box threaded connection is tightened to the two pin threaded connections according to the formula 5, wherein the sealing structure comprises the box threaded connection and the pin threaded connection; and

arranging the sealing ring in a gap between the ends of the two pin threaded connections after the box threaded connection is tightened to the two pin threaded connections, to seal the oil well pipe connection.

Specifically, Fig. 7 is a schematic diagram showing a sealing structure of an oil well pipe connection with a sealing ring at the ends of the threaded pipes according to an embodiment of the present application. In Fig. 7, the reference number 1 can represent the box threaded connection, 2 can represent the sealing ring, 3 can represent the pin threaded connection, and $t$ may represent the thickness of the sealing ring. As shown in Fig. 7, the sealing ring can be arranged at the seal of the oil well pipe connection, the material of the sealing ring can be the actual material, and sizes of the sealing ring and the sealing structures of the oil well pipe connection, such as the box threaded connection, the pin threaded connection and the like can be calculated by the above formula 5.

Specifically, according to the above embodiment, the value of the elastic strain $\varepsilon_e$ of the actual material in the sealing structure of the oil well pipe connection can be obtained according to actual experience or experiments. The interference $\theta_s$ of the steel material of the pin threaded connection can be for example $\theta_s = 0.1 \sim 0.2mm$. The distance $J$ between ends of two pin threaded connections when a box threaded connection is tightened to the pin threaded connections can be obtained by referring to standards. Furthermore, the thickness $t$ of the sealing ring of the oil well pipe meeting the above formula 5 can be determined.

For example, in an embodiment of the present application, $\varepsilon_e = 2\% \sim 5\%$ and $\theta_s = 0.1 \sim 0.2mm$ may be taken. According to the API SPEC.5B standard, $J = 12.1mm$ . Then, it can be calculated according to formula (5) that $\theta = 0.60$ - $1.50mm$ and the thickness of the sealing ring $t = 26.0 \sim 26.8mm$.

After the sizes of the sealing structure of the oil well pipe connection and of the sealing ring are determined, the manufacturing deviation of the thickness $t$ of the sealing ring can be determined by using a finite element mechanical simulation method. It is possible to use materials such as shape memory alloys to make the sealing ring according to the size of the sealing ring obtained, such as the thickness $t$ of the sealing ring and the sealing surface contact width $L$, and arrange the sealing ring at the seal of the oil well pipe connection. As shown in Fig. 7, the sealing ring may be arranged in the gap between the ends of two pin threaded connections inside the box threaded connection of the oil well pipe.

The method for arranging the sealing ring in the gap between the ends of two pin threaded connections inside the box threaded connection of the oil well pipe in an embodiment of the present application is simple to operate and has wide applicability, and by arranging the sealing ring at the seal of the oil well pipe connection, the elastic strain at the seal of the oil well pipe connection can be improved, and the reliability of the sealing of the oil well pipe connection is further improved.

Figs. 4(a)-7 are the schematic diagrams showing the sealing structures of different oil well pipe connections. According to actual requirements, the form of the sealing structure of the oil well pipe connection that meets the use requirements can be selected, which is not intended to be limited by the specific embodiment of the present application.

The shape of the sealing surface in the above embodiments may be conical, spherical, cylindrical, etc. and the shape of the sealing ring may be conical, spherical, cylindrical, etc.

On the basis of above-described embodiment, in an embodiment of the present application, the shape memory alloy has a reverse martensitic transformation finish temperature lower than a drill floor ambient temperature.

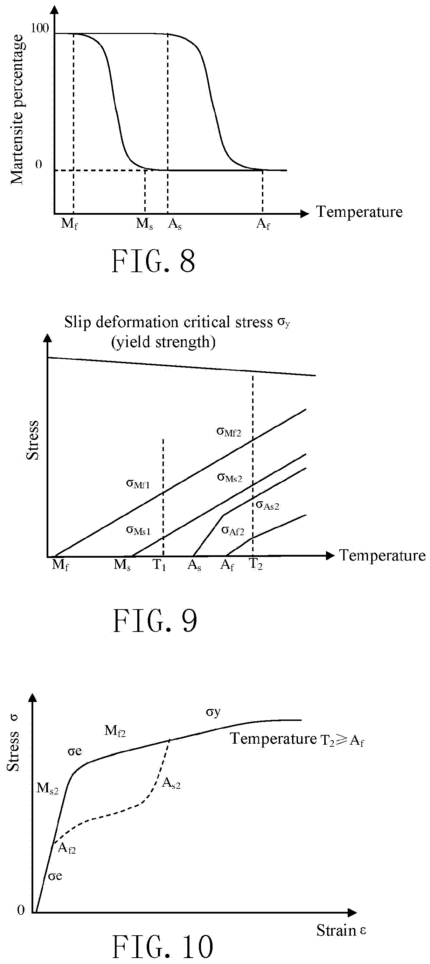

Fig. 8 is a schematic diagram showing a relationship between a percentage of a martensitic transformation of a shape memory alloy and temperature according to an embodiment of the present application. In Fig. 8, $M_S$ and $M_f$ may represent the martensitic transformation start temperature and finish temperature, respectively. $A_s$ and $A_f$ may represent the parent austenite transformation (i.e. the reverse martensitic transformation) start temperature and finish temperature, respectively. When the temperature drops to $M_S$, the alloy undergoes a martensitic transformation. On the contrary, when the temperature rises to $A_S$, the martensite transforms to the parent austenite. Shape memory effect refers to the property of a material that is capable of remembering its shape in the high temperature austenite parent phase state, i.e. the deformation applied in the low temperature martensite phase, when being heated above the temperature $A_S$ will transform to the high temperature austenite parent phase to restore the original shape.

The martensitic transformation of the shape memory alloy may be induced not only by temperature but also by stress. Fig. 9 is a schematic diagram showing stress-induced martensitic transformation and reverse transformation of a shape memory alloy at various temperatures according to an embodiment of the present application. The parameters in the abscissa of the figure such as $M_f$, $M_S$, $T_1$, $T_2$, etc. can represent temperature values. $\sigma_{MS1}$, $\sigma_{Mf1}$, $\sigma_{Ms2}$, $\sigma_{Mf2}$, $\sigma_{Af2}$, and $\sigma_{As2}$ can represent stress values. In the case that the ambient temperature $T_1$ is lower than the parent austenite start temperature $A_s$, when the stress exceeds $\sigma_{Ms1}$, the stress-induced martensitic transformation can occur. Even if the stress disappears, the alloy still has residual strain due to no austenite transformation. However, if the alloy is heated above temperature $A_S$, the austenite transformation occurs, the residual strain of the alloy disappears, and the alloy returns to the original shape. This also belongs to a shape memory effect rather than a superelastic effect.

In the case that the ambient temperature $T_2$ is higher than the finish temperature $A_f$ of the inverse martensitic transformation of the shape memory alloy, as shown in Fig. 9, i.e. in the parent austenite state, the alloy deforms under the external force. When the external force is larger than the stress $\sigma_{Ms2}$, the stress-induced martensitic transformation can occur, and with the increase of the stress and the strain, the volume of martensite gradually increases until the stress reaches $\sigma_{Mf2}$ to complete the martensitic transformation. Conversely, when the stress is reduced to $\sigma_{As2}$, the martensite is transformed to the parent austenite, and the deformation starts to disappear. Until the stress is reduced to zero, the shape of the alloy returns to the original parent austenite state. Since this deformation is much larger than the elastic limit of other typical alloys, it is called superelastic, and also called pseudoelastic. Some shape memory alloys have superelastic strains of up to 7% to 8% or more, far exceeding the elastic strain (no more than 0.5%) of typical metallic materials. According to the embodiment of the present application, the sealing structure of the oil well pipe connection is designed by utilizing the superelastic property of the shape memory alloy. The metal elastic strain of the sealing surface of the oil well pipe connection designed according to the embodiment of the present application can reach 1%-6%, and the metal interference of the sealing surface is greatly improved. The yield strength of some shape memory alloys is similar to that of a steel material for manufacturing an oil well pipe, and the contact compressive stress of the sealing surface of the oil well pipe connection in the embodiment of the present application can reach more than 80% of the yield strength of the steel material of the oil well pipe connection body.

Superelasticity is one of the most important mechanical properties of shape memory alloys, but not all shape memory alloys have this property, and which are not necessarily suitable for oil well pipe connections if any.

Fig. 10 is a schematic diagram showing a stress-strain hysteresis loop of a shape memory alloy according to an embodiment of the present application. The shape memory alloy according to an embodiment of the present application has a reverse martensitic transformation finish temperature $A_f$ lower than a drill floor ambient temperature $T_2$. In the make-up process of threaded connection of oil well pipe, with the increase of the number of buckle turns and torque, the contact compressive stress of the sealing surface alloy gradually increases from 0, and elastic strain is generated (see the straight line segment 0-$M_{S2}$ in Fig. 10). As the make-up torque increases, when the contact stress reaches $\sigma_{Ms2}$ in Fig. 9, the sealing surface alloy undergoes a martensitic transformation, resulting in a pseudoelastic strain (see Fig. 10, curve segment $M_{S2}$ - $M_{f2}$). If the contact compressive stress exceeds $M_{f2}$ of Fig. 9, then the martensitic transformation is complete, and the martensite loading phase is entered, the alloy undergoes elastic strain (see Fig. 10, straight line segment $M_{f2}$ - $\sigma_y$) until the contact compressive stress reaches yield strength $\sigma_y$ and plastic deformation occurs. According to the embodiment of the present application, the contact compressive stress can be controlled to be around $M_{f2}$, and the maximum value does not exceed the yield strength $\sigma_y$ of the alloy. When breaking out the threaded connection of the oil well pipe, the contact compressive stress of the sealing surface alloy is gradually reduced along with the reduction of the torque, before the stress is reduced to $\sigma_{Ms2}$ in Fig. 9, the alloy material shows an elastic unloading characteristic, and when the contact stress is reduced to $\sigma_{As2}$ in Fig. 9, the sealing surface alloy is subjected to austenite transformation and generates a non-linear strain recovery (see Fig. 10, curve segment $A_{S2}$ - $A_{f2}$). When the contact compressive stress drops to $\sigma_{Af2}$ of Fig. 9, the alloy is completely transformed into austenite, and the alloy again exhibits austenite elastic unloading performance (see Fig. 10, straight line segment $\sigma_e$) until the contact compressive stress reaches 0, the strain also returns to 0, and the residual strain is 0. This property of the alloy is the transformation pseudoelasticity, known as superelasticity, and the corresponding stress-strain curve is the hysteresis loop curve in the shape of the "small flag" of Fig. 10. The recoverable strain of the superelastic shape memory alloy can reach 8%.

If the oil well pipe is loosened due to various factors such as breakout or vibration during the lowering process or the downhole service process, the compressive stress on the sealing surface is reduced, and the shape memory alloy material will undergo a reverse martensitic transformation, that is, austenite transformation, and strain recovery is generated, so that the sealing surfaces are ensured to be in close contact all the time to block a leakage channel. In the case that the shape memory alloy is utilized to manufacture the sealing overlay layer or the sealing ring arranged at the seal of the oil well pipe connection, the superelasticity and shape memory effect of the shape memory alloy can be utilized to improve the reliability of the sealing of the oil well pipe connection.

In an embodiment of the present application, the shape memory alloy meets the following conditions at drill floor ambient temperature:

a critical stress $\sigma_{Ms}$ inducing martensitic transformation of the shape memory alloy is 20%-80% of a yield strength of a steel material of the oil well pipe; and
a maximum recoverable strain (i.e. superelastic strain) of the shape memory alloy is greater than 4%.

In an embodiment of the present application, the shape memory alloy meets the following conditions at downhole temperature:

a critical stress inducing martensitic transformation of the shape memory alloy is 20%-80% of a yield strength of a steel material of the oil well pipe; and
a maximum recoverable strain (i.e. superelastic strain) of the shape memory alloy is greater than 2%.

By adopting the performance requirement of the shape memory alloy in the above embodiment, the shape memory alloy meeting the corresponding requirement at the drill floor ambient temperature and the downhole temperature is selected as actual material to manufacture the sealing structure, and the sealing structure is arranged at the seal of the oil well pipe, so that the reliability of the sealing of the sealing structure of the oil well pipe connection can be ensured all times in the working environment. During the downhole service process of the oil well pipe, the temperature is increased, the reverse martensitic transformation, namely the austenite transformation, of the sealing surface material can also occur, the strain recovery is generated, and the sealing surface contact is tighter. If workover is needed, the tubing is lifted out of the ground, the temperature is raised to the ground ambient temperature again. When the threaded connection is separated, the compressive stress of the sealing surface is reduced to 0, the strain is almost recovered to 0, the residual strain is almost 0, and the tubing can still be put into use again.

The implementation of the present application is introduced below in conjunction with specific examples.

The pressure of downhole natural gas $P$ =90Mpa, the specification of a premium tubing is 88.9 mm, the wall thickness is 7.34 mm, and the steel grade is P110.

Design step 1: the sealing surface contact compressive stress $\sigma_e$, the sealing structure material elastic strain $\varepsilon_e$, the yield strength $\sigma_y$ of the sealing structure or the sealing surface material and the sealing surface contact width L are designed. According to experience, the tightness safety margin of the sealing design is determined, wherein the contact compressive stress safety margin $k_{\sigma s}$ = 5.0, the elastic strain safety margin $k_{\varepsilon s}$ =1.0 and the strength safety margin $k_{ys}$ = 0.2. Then the sealing surface contact compressive stress $\sigma_e$ should meet

$$k_\sigma = \frac{\sigma_e - P}{P} \geq k_{\sigma s} = 5.0$$

, the strain $\varepsilon_e$ of the sealing structure or sealing surface material should meet

$$k_\varepsilon = \frac{\varepsilon_e - \delta}{\delta} \geq k_{\varepsilon s} = 1.0$$

, the yield strength $\sigma_y$ of the sealing structure or the sealing surface material and

$$k_y = \frac{\sigma_y - \dfrac{PD}{2\pi L}}{\sigma_y} \geq k_{ys} = 0.2$$

the sealing surface contact width $L$ should meet . Wherein, it is known that the pressure of sealed gas P=90MPa, the diameter of the sealing surface D = 80mm, the strength $\sigma_y$ of the sealing structure or the sealing surface material selected is equal to 85% of the oil well pipe steel grade P110, that is, $\sigma_y$ = 640MPa. According to the manufacturing deviation of the sealing surface and downhole string vibration, there may be a leakage gap $\delta$ = 1.0% on the sealing surface. It can be calculated that the sealing surface contact compressive stress should be $\sigma_e \geq 500Mpa$, the sealing structure material elastic strain should be $\varepsilon_e \geq 2\%$, and the sealing surface contact width should be L $\geq$2.2mm, to ensure that the tubing connection has sufficient sealing performance.

Design step 2: selecting the actual materials used to achieve the superelastic design of the sealing structure

According to the design result of the step 1, the sealing structure material elastic strain should be $\varepsilon_e \geq 2\%$, and the steel material for manufacturing the oil well pipe does not meet this requirement. In the embodiment of the present application, the superelastic effect of the TiNi series shape memory alloy can be utilized to realize the superelastic strain design of the sealing structure of the oil well pipe connection. The TiNi series alloy is a typical shape memory alloy. Above the temperature $A_f$ (finish temperature of reverse martensitic transformation), the martensite induced by stress can only exist stably under the stress. Once the stress is released, the reverse transformation will occur immediately to return to the parent austenite state. Macroscopic deformation generated under the stress also completely disappears along with reverse transformation, wherein the relationship between stress and strain shows obvious nonlinearity, the nonlinear elasticity is closely related to transformation, so that it is called transformation pseudoelasticity. The recoverable strain of the alloy reaches 7%-8% or more, far exceeding the elastic strain (about 0.2%) of common metal materials, and therefore it is also called superelasticity. It can be seen that the TiNi alloy has an apparent elastic range of 5 to 10 times that of common metal materials.

According to the embodiment of the present application, a Ti-50.7at%Ni alloy can be selected, the reverse martensitic transformation finishing temperature (namely the parent austenite transformation finishing temperature) $A_f$ of the alloy is 8°C, that is, the microstructure of the alloy is parent austenite at the ambient temperature of a drill floor.

For a Ti-50.7at%Ni alloy at 20°C, (1) the critical stress inducing martensitic transformation is $\sigma_{Ms}$ = 400 Mpa; (2) the superelastic strain (also called maximum recoverable strain) of the alloy is 4.5-5.5%, and the corresponding residual strain $\varepsilon_R$ is 0%; (3) The yield strength $\sigma_y$ of the alloy (also called slip deformation critical stress) is 650 MPa.

For a Ti-50.7at%Ni alloy at 100°C, (1) the critical stress inducing martensitic transformation is $\sigma_{Ms}$ = 600 Mpa; (2) the superelastic strain (also called maximum recoverable strain) of the alloy is 2~3%, and the corresponding residual strain $\varepsilon_R$ is less than 0.5%; (3) The yield strength $\sigma_y$ of the alloy (also called slip deformation critical stress) is 900 MPa.

Design step 3: selecting the manufacturing method for the superelastic alloy sealing structure, and design the structure and the size.

Example 1: the sealing overlay layer is fabricated with the superelastic shape memory alloy employing the additive manufacturing technologies such as built-up welding or 3D printing, and the surface of the sealing structure of the oil well pipe connection is overlaid with the sealing overlay layer, to form a sealing structure as shown in Figs. 4(a)-4(d).

According to the design results of the step 1 and the step 2, the width of the sealing overlay layer made of the superelastic shape memory alloy is $L\geq2.2$mm, the value of which can be $L=3\sim10$mm, and the strain of the superelastic shape memory alloy is $\varepsilon_e$=4%; the elastic deformation of the steel material of the oil well pipe connection body can be $\varepsilon_s$=0.2%; and the average value of the outer diameter and the inner diameter of the oil well pipe connection is approximately equal to the outer diameter of the tubing body or the sealing surface diameter D=80mm. If the thickness of the sealing overlay layer made of the superelastic shape memory alloy is $t$ =3.0mm, the radial interference of the sealing surface is $\theta = \theta_e + \theta_s = \varepsilon_e t + \varepsilon_s D = 0.30mm$. The outer diameter of the sealing surface of the pin threaded connection is the same as that of the existing TGRC premium pin threaded connection, that is, $D_{ps}$ =80mm. The inner diameter of the sealing surface of the box threaded connection is calculated to be $d_{bs}$=79.4mm, according to $$\theta = \frac{1}{2}(D_{ps} - d_{bs})$$. Then a finite element mechanical simulation method is used to determine the manufacturing deviations of $t$, $D_{ps}$ and $d_{bs}$. The shape of the sealing surface, the axial location of the sealing surface, other sizes of the sealing structure, form and size of thread, etc. may be the same as existing TGRC premium tubing or casing connections. TGRC premium connection is an oil well pipe thread designed and developed by CNPC Tubular Goods Research Institute.

Example 2: the sealing structure shown in Figs. 5(a)-5(e) is formed by applying the superelastic shape memory alloy sealing ring design and manufacturing technique to achieve the sealing of the oil well pipe connection.

According to the design results of the step 1 and the step 2, the width of the sealing ring made of the superelastic shape memory alloy should be $L\geq2.2$mm, the value of which can be $L = 3 \sim 8mm$, and the elastic strain of the superelastic shape memory alloy is $\varepsilon_e$=4%; the elastic deformation of the steel material of the oil well pipe connection body can be $\varepsilon_s$=0.2%; and the average value of the outer diameter and the inner diameter of the oil well pipe connection is approximately D=80mm. If the thickness of the sealing ring made of the superelastic shape memory alloy is $t$=3.0mm, the radial interference of the sealing surface is $\theta = \theta_e + \theta_s = \varepsilon_e t + \varepsilon_s D = 0.30mm$. The outer diameter $D_{ps}$ of the sealing surface of the pin threaded connection is basically the same as that of the existing TGRC premium connection, that is, $D_{ps}$ =80mm. The inner diameter of the sealing surface of the box threaded connection is calculated to be $d_{bs}$=85.4mm, according to

$$\theta = \frac{1}{2}(D_{ps} - (d_{bs} - 2t))$$. The outer diameter $D_{s1}$ of the middle of the sealing ring is equal to the inner diameter $d_{bs}$ of the sealing surface of the box threaded connection, that is, $D_{s1} = d_{bs} = 85.4mm$. The sealing ring can be a cone, that is, the inner and outer surfaces of the sealing ring are conical surfaces, the sealing surface of the box threaded connection is a conical surface, and the sealing surface of the pin threaded connection is a spherical surface. Then a finite element mechanical simulation method is used to determine the manufacturing deviations of $t$, $D_{s1}$, $D_{ps}$, and $d_{bs}$.

The placement position of the sealing ring, other sizes of the sealing structure, form and size of thread and the like are the same as those of an existing TGRC premium connection oil well pipe connection.

Example 3: as shown in Figs. 6(a)-6(b), a Ti-50.7at%Ni superelastic shape memory alloy sealing ring is placed in torque shoulder position, the strain of the Ti-50.7at%Ni superelastic shape memory alloy is $\varepsilon_e$=4%; and the interference of the connection torque shoulder without the sealing ring is $\theta_s$ = 0.3$mm$. According to the formula, $\theta = \theta_e + \theta_s = \varepsilon_e t + \varepsilon_s D$, if the thickness of the sealing ring is $t$=3.0mm, it can be calculated that the shoulder clearance for placing the sealing ring is h=2.58mm. Finally, a finite element mechanical simulation method is used to determine the manufacturing deviations of $t, h$. The sealing method using the torque shoulder sealing ring can be used simultaneously with the method using the superelastic alloy overlay layer or ring.

Example 4: as shown in Fig. 7, a superelastic alloy sealing ring is placed between the ends of the two pin threaded connections inside the oil well pipe coupling, i.e. the box threaded connection. The seal ring thickness $t$ and its difference $\theta$ with the distance between ends of the pin threaded connections (J as defined in API SPEC.5B standard) should meet: $\theta = t - 2J = \theta_e + \theta_s$, wherein the interference of superelastic alloy is $\theta_e = \varepsilon_e t$, the design value for superelastic strain is $\varepsilon_e$ =4%, the interference of the steel material of the pin threaded connection is $\theta_s$ = 0.2mm . According to the API SPEC.5B standard, $J$ = 12.7$mm$. Then, it can be calculated that $\theta$ =1.2mm and the sealing ring thickness $t$ =26.6mm. Finally, a finite element mechanical simulation method is used to determine the manufacturing deviations of $t$.

Roughness and manufacturing deviation exist on the sealing surface of the premium tubing or casing connection. A leakage channel can be formed on the sealing surface due to, for example, collision damage or insufficient make-up torque in the connecting process, loosening caused by string vibration in the downhole service process and the like. Currently, the sealing design for premium tubing or casing connections mainly involves contact compressive stress design and calculation. The contact compressive stress is limited to be within the yield strength of materials, that is, the metal interference of a sealing surface is controlled within a metal elastic strain range. The existing oil well pipe threaded connections are all made of steel materials, and their elastic strain is less than 0.2%. Such a small amount of strain or interference cannot achieve the blocking of some larger leakage channels.

The embodiment of the present application provides a superelastic strain design and manufacturing method for a sealing structure of an oil well pipe connection, which comprises a mathematical model and failure criterion for evaluating the tightness of the oil well pipe connection, a superelastic strain design and manufacturing method for the sealing structure, a method for selecting a superelastic shape memory alloy for manufacturing the sealing structure, and the like.

After the make-up of the oil well pipe provided by the embodiment of the present application, the metal of the sealing surface can generate an elastic strain of 1% to 6%, which is obviously higher than the strain of the current traditional oil well pipe connection sealing structure, such that the interference of the sealing surface is significantly improved, various leakage channels are effectively blocked, and the sealing reliability is significantly improved. If the oil well pipe connection provided by the embodiment of the present application is loosened due to various factors such as breakout or vibration during the lowering process or the downhole service process, the sealing surface material will undergo a reverse martensitic transformation, that is, austenite transformation, and strain recovery is generated, so that the sealing surfaces are ensured to be in close contact all the time to block a leakage channel. After the oil well pipe provided by the embodiment of the present application is lowered into a well, the temperature is increased, the reverse martensitic transformation, namely the austenite transformation, of the sealing surface material can occur, the strain recovery is generated, and the sealing surface contact is tighter to achieve a better sealing. If workover is needed, the oil well pipe provided by the embodiment of the present application is lifted out of the ground. When the threaded connection is separated, the strain of the sealing surface disappears, the geometry and the size are restored, and the oil well pipe can be used again.

The sealing structure of the oil well pipe connection provided by the embodiment of the present application can be manufactured by using the superelastic shape memory alloy. This alloy can absorb a lot of energy in the process of loading and unloading, exhibiting a damping characteristic and a hysteresis effect in the stress-strain relationship, which can prevent the vibration loosening of the threaded connection of the oil well pipe, and further improve the structural integrity and the sealing integrity of the oil well pipe.

The sealing structure of the oil well pipe connection provided by the embodiment of the present application can be manufactured by using the superelastic shape memory alloy, the elastic strain of which can reach 6%-8%. The micro-convex body on the alloy can be elastically deformed when come into contact with the friction piece, which increases the stressed area of the surface, and when separated, it will restore to the shape and size before contact, without cold welding or hot welding. That is, the superelasticity brings self-adaption capability to the grinding surface, so that the grinding surface damage is small. From a microscopic point of view, the alloy is subjected to stress-induced martensitic transformation under the external force, and when the external force is removed, reverse martensitic transformation occurs. This phase structure change can effectively consume the external force, so that the surface stress of the alloy is uniformly distributed, the effect of relieving stress concentration at the crack tip and preventing crack propagation is achieved, and the abrasion degree of the alloy is reduced. Therefore, the superelastic shape memory alloy selected according to the present invention can improve the wear resistance of the sealing surface and further ensure the sealing of the oil well pipe.

The embodiment of the present application also provides a method for evaluating tightness of an oil well pipe connection, comprising:

acquiring a tightness evaluation parameter of the oil well pipe, the tightness evaluation parameter comprising a contact compressive stress parameter, an elastic strain parameter and a strength parameter, wherein determining that the oil well pipe connection is sealed, if the contact compressive stress parameter, the elastic strain parameter and the strength parameter are all greater than zero; and

determining that the sealing of the oil well pipe connection fails, if at least one of the contact compressive stress parameter, the elastic strain parameter and the strength parameter is less than or equal to zero.

Specifically, for the specific expression of the tightness evaluation parameter, the above-described embodiment may be referred to, such as Formula 1, which will not be repeated here. If the compressive stress value $\sigma_e$ of the sealing surface is insufficient, or if the compressive stress of the sealing surface is reduced due to various factors such that the contact compressive stress $\sigma_e$ of the sealing surface being less than the pressure P of the sealed gas in the oil well pipe, the gas will break the sealing surface to form a leakage channel, and leakage occurs. Due to various factors such as the roughness and manufacturing deviation of the sealing surface of the sealing structure of the oil well pipe connection, damage during make-up and break-out of the connection, loosening of threads during service and the like, a clearance $\delta$ will appear in part of the sealing surface. Even if the compressive stress of the sealing surface is enough, if the elastic strain $\varepsilon_e$ of the sealing surface material is too small, the sealing surfaces cannot be in full contact to block the clearance $\delta$, and a leakage channel will be formed, leading to a sealing failure. The material in the sealing surface contact width range must have sufficient structural strength to ensure that the sealing structure can withstand the fluid pressure within the pipe without strength failure. If the yield strength or the contact width L of the sealing surface material is insufficient, in the case that the shear stress is larger than the yield strength $\sigma_y$ of the material under the pressure of gas in the pipe, the material in the contact width range of the sealing surface will undergo shear yield deformation or fracture, resulting in leakage. As long as the contact compressive stress parameter $k_\sigma$, the elastic strain parameter $k_\varepsilon$ and the strength parameter $k_y$ lead to the formation of a sealing channel, the seal fails.

For example, the specification of the premium tubing provided in an example of the present application is 88.9 mm, the wall thickness is 7.34 mm, the steel grade is P110, and the natural gas pressure in the tubing is $P$ =90MPa. According to sealing structure parameters provided by a manufacturer, it can be calculated by a finite element mechanical analysis method that the contact compressive stress of the sealing surface is $\sigma_e$=650MPa; the sealing surface material is a steel material, and the maximum elastic strain is $\varepsilon_e$=0.2%; $\delta$ is the magnitude of geometry deviation or defect of the sealing surface caused by out-of-roundness of the sealing circumference, diameter deviation, surface roughness, surface coating defects, damage, etc., in % or mm; the yield strength of sealing surface material is $\sigma_y$=758MPa; the sealing surface circumferential diameter is D=80mm; the sealing surface contact width L = 1.5 ~ 2.5mm; the elasticity strain of sealing structure or sealing surface material is $\varepsilon_e \leq 0.2\%$; the design value of the roughness of the sealing surface is Ra≤3.2.

The design value of the outer diameter out-of-roundness of the sealing circumferential surface is not more than 0.2%, the design deviation of the diameter of the sealing circumference is $\pm$ 0.1 mm (equivalent to 0.2% diameter deviation for an 88.9 mm tubing). According to actual production control deviation and quality inspection data of the tubing, $\delta \leq 0.18\%$.

The value of each tightness evaluation parameter can be calculated by using the above formula (1), and a tightness evaluation parameter $k = k_\sigma k_\varepsilon k_y$ = 0.18 > 0 is further obtained, indicating that the string of the oil well pipe has certain tightness at the initial stage of service. It can be calculated that the contact compressive stress parameter of the

sealing surface
$$k_\sigma = \frac{\sigma_e - P}{P} = 6.22$$
, which means the safety margin is large; the structural strength parameter of the sealing structure or the sealing surface material
$$k_y = \frac{\sigma_y - \dfrac{PD}{2\pi L}}{\sigma_y} = 0.30$$
, which means there is a certain safety margin; the elastic strain parameter of the sealing structure or the sealing surface
$$k_\varepsilon = \frac{\varepsilon_e - \delta}{\delta} = 0.10$$
,

which means the safety margin is too small. In addition, due to the unevenness (not more than 10%) in the wall thickness of the pipe body, the outer diameter out-of-roundness of the sealing circumferential surface of the connection may be gradually larger than 0.2% during service of the string, and the deviation value of the diameter of the sealing circumference may exceed $\pm 0.1$ mm, especially in the case that the string may vibrate during downhole service, and the connection may loosen. Therefore, during the service of string, there may be a clearance of $\delta \geq 0.2\%$ in part of the sealing surface. After a period of service, the tightness evaluation parameter may be reduced to tightness evaluation parameter $k \leq 0$, and the string will lose its tightness. The practical application shows that the laboratory sealing evaluation result of the tubing meets such requirements that no leakage occurs in first few years of downhole service, but after several years of service, some tubing strings leak, and the wellbore is operated under pressure.

By utilizing the method for evaluating the tightness of the connection structure of the oil well pipe provided by the embodiment of the present application, the reliability of the sealing of the sealing structure of the oil well pipe connection can be analyzed, laying a theoretical foundation for the design of the sealing structure of oil well pipe connections.

The embodiments of the present application also provide a method for designing an oil well pipe connection, in which the actual material, the sealing structure material elastic strain, and the sealing surface contact width obtained in manufacturing the sealing structure of the oil well pipe connection in the above embodiments can be applied to design the material and size of the sealing structure, and the like. The specific method for designing the sealing structure of the oil well pipe connection may be carried out with reference to the manufacturing method for the oil well pipe connection, the tightness evaluation method, the sealing structure, etc. in the above-described embodiments, and will not be repeated here.

The embodiment of the present application also provides an apparatus for sealing an oil well pipe connection. As shown in Figs. 4(a)-7, the sealing structure of the oil well pipe connection comprises: a pin threaded connection, a box threaded connection and a sealing structure. The sealing structure is arranged at a seal between the pin threaded connection and the box threaded connection, and the sealing structure is made of the actual material. The sealing structure may include the structures such as sealing overlay layer, sealing ring, and the actual material may be a metal material with superelastic properties, such as a shape memory alloy with superelastic properties.

According to the sealing structure of the oil well pipe connection provided by the embodiment of the present application, the superelastic property of the actual material is utilized, the mechanical properties such as elastic strain and the like of the sealing structure of the oil well pipe connection are improved, and the reliability of the sealing of the oil well pipe connection is further improved.

It should be noted that the formula provided by the above-described embodiments is merely an example and can be adjusted, changed, etc. according to actual needs, and the embodiments of the present application are not specifically limited.

Particular embodiments of the present disclosure have been described above. There may be other embodiments which fall within the scope of the appended claims. Under some circumstances, the operations or steps included in the claims may be performed in an order different from that described in the embodiments and the desired result can still be achieved in this case. In addition, the processes depicted in the drawings do not have to be performed in the specific order as depicted or performed in a consecutive sequence to achieve the desired result. In some embodiments, multitask processing and parallel processing are also possible or may be advantageous.

Some steps of the method for sealing an oil well pipe connection provided in the embodiments of the present disclosure, such as mechanical analysis, as well as the method for evaluating the tightness of the connection structure of the oil well pipe may be implemented by a processor executing corresponding program instructions in a computer, for example, implemented in a PC by using a C++ language in a Windows operating system, implemented in a Linux system, or implemented in a smart terminal by using an appropriate program designing language in Android or iOS system, or implemented on the basis of process logic of a quantum computer.

Specifically, these can be implemented by a computer chip or entity, or implemented by a product having a specific function. A typical device implementation is a computer. Specifically, the computer can be, for example, a personal computer, a laptop computer, a vehicle-mounted human-computer interaction device, a cellular phone, a camera phone, a smart phone, a personal digital assistant, a media player, a navigation device, an email device, a game console, a tablet computer, a wearable device, or a combination of any of these devices.

It is to be noted that although one or more embodiments of this disclosure provides operation steps as depicted in the embodiment or flowchart, more or fewer operation steps may be included as necessary without involving creative efforts. The order of the steps as described in the embodiments is merely one of many orders for performing the steps, and rather is not meant to be unique. In practical implementation in a system or an apparatus, the steps can be either performed in the order depicted in the embodiments or the drawings, or be performed in parallel (for example, in an environment of parallel processors or multi-thread processing, and even in a distributed data processing environment). It is to be comprehended that, the terms "comprise", "include" or any other variant thereof do not mean to be exclusive in that a process, a method, a product or a device comprising or including a number of elements may comprise or include not only those elements, but also other elements not explicitly listed, or may further comprise or include elements inherent to such process, method, product or device. It is not excluded that a process, method, product or device comprising an element may further comprise other elements, if not specifically prescribed. The terms first, second, etc. are used to refer to names and not to any particular order.

For ease of description, an apparatus is broken down into units by functionalities to be described respectively. However, in practical implementation, the function of one unit may be implemented in a plurality of software and/or hardware entities, or vice versa, the functions of a plurality of units may be implemented in a single software and/or hardware entity. The apparatus embodiments described above are merely illustrative. For example, the division of the units is merely a division of logical functions and there can be some other divisions in actual implementation. For example, a plurality of units or parts can be combined or integrated into another system, or some features can be ignored or not performed. In addition, the displayed or discussed coupling or communication connection with each other may be indirect coupling or communication connection through some interfaces, devices or units, and may be in electrical, mechanical or other forms.

The present invention has been described with reference to flowcharts and/or block diagrams of the method, device (apparatus) and computer program product of the embodiments in this disclosure. It should be understood that each process and/or block in the flowcharts and/or block diagrams and combinations of processes and/or blocks in the flowcharts and/or block diagrams can be implemented by computer program instructions. The computer program instructions may be provided to a general-purpose computer, a special-purpose computer, an embedded processor or a processor of other programmable data processing devices to form a machine, so that instructions executed by the computer or the processor of other programmable data processing devices form an apparatus configured to implement functions designated in one or more processes in a flowchart and/or one or more blocks in a block diagram.

The computer program instructions may also be stored in a computer readable memory which can guide the computer or other programmable data processing devices to operate in a specific manner, so that the instruction stored in the computer readable memory forms an article of manufacture comprising therein an instructing device, which implements functions designated in one or more processes in a flowchart and/or one or more blocks in a block diagram.

The computer program instructions may also be loaded onto a computer or other programmable data processing devices, so that a series of operational steps are performed on the computer or other programmable devices to form a computer implemented process, and therefore, the instructions executed in the computer or other programmable devices provide steps for implementing functions designated in one or more processes in a flowchart and/or one or more blocks in a block diagram.

In a typical configuration, the computing device includes one or more central processing units (CPUs), an input/output interface, a network interface, and a memory. The memory can include computer readable media such as a volatile memory, a Random Access Memory (RAM), and/or non-volatile memory, e.g., a Read-Only Memory (ROM) or a flash RAM. The memory is an example of a computer readable medium.

The computer readable medium includes non-volatile and volatile medium as well as removable and non-removable medium, and can implement information storage by any method or technology. The information can be a computer readable instruction, a data structure, a program module or other data. An example of the storage medium of a computer includes, but is not limited to, a phase change memory (PRAM), a static random access memory (SRAM), a dynamic random access memory (DRAM), other types of RAM, a ROM, an electrically erasable programmable read-only memory (EEPROM), a flash memory or other memory technologies, a compact disk read-only memory (CD-ROM), a digital versatile disc (DVD) or other optical storage devices, a cassette tape, a magnetic tape/magnetic disk storage device, a graphene storage device or other magnetic storage devices, or any other non-transmission medium, and can be used to store information accessible to the computing device. According to the definition in this context, the computer readable medium does not include transitory media, such as a modulated data signal and a carrier wave.

Those skilled in the art should understand that the embodiments of the present disclosure can be provided as a method, a device, or a computer program product. Therefore, the embodiments of the present disclosure may be implemented in a form of an absolute hardware embodiment, an absolute software embodiment, or an embodiment combining software and hardware. Moreover, the embodiments of the present disclosure can be in the form of a computer program product implemented on one or more computer usable storage medium (including, but not limited to, a magnetic disk memory, a CD-ROM, an optical memory and the like) including computer program codes.

The embodiments in the present disclosure are described in a progressive manner, which means descriptions of each embodiment are focused on the differences from other embodiments, and the descriptions of the same or similar aspects of the embodiments are applicable to each other. In particular, for the embodiments involving system, of which essence is analogous to that of the method embodiments, reference can be made to the method embodiments, and detailed description may be omitted. In the description of this specification, descriptions with reference to the terms "one embodiment", "some embodiments", "examples", "specific examples", or "some examples" etc. mean specific features, structures, materials or characteristics described in conjunction with the embodiment or example, are included in at least one embodiment or example in this specification. In this specification, the schematic representations of the above-mentioned terms do not necessarily refer to the same embodiment or example.

The scope of protection of the current invention is defined by the appended claims.

**Claims**

1. A method for determining manufacturing parameters for a sealing structure of an oil well pipe connection, **characterized by** comprising:

   determining (S1) a sealing surface contact compressive stress, a sealing structure material elastic strain, a sealing structure material strength and a sealing surface contact width of the oil well pipe by using a first formula based on a rule that a contact compressive stress parameter, an elastic strain parameter and a strength parameter of the oil well pipe are greater than or equal to a contact compressive stress safety margin, an elastic strain safety margin and a strength safety margin of the oil well pipe respectively, wherein the contact compressive stress safety margin $k_{\sigma s} \geq 0.2$, the elastic strain safety margin $k_{\varepsilon s} \geq 0.2$, and the strength safety margin $k_{ys} \geq 0.2$, wherein the first formula is shown as follows:

   $$\begin{cases} k_\sigma = \dfrac{\sigma_e - P}{P} \\[4mm] k_\varepsilon = \dfrac{\varepsilon_e - \delta}{\delta} \\[4mm] k_y = \dfrac{\sigma_y - \dfrac{PD}{2\pi L}}{\sigma_y} \end{cases}$$

   wherein, $k_\sigma$ represents a contact compressive stress parameter, $\sigma_e$ represents a sealing surface contact compressive stress, P represents a pressure of gas sealed in the pipe, $k_\varepsilon$ represents an elastic strain parameter, $\varepsilon_e$ represents an elastic strain of a sealing structure or a sealing surface material, $\delta$ represents a local clearance of a sealing surface, $k_y$ represents a strength parameter, $\sigma_y$ represents a yield strength of a sealing structure or a sealing surface material, D represents a circumferential diameter of a sealing surface, and L represents a sealing surface contact width;
   determining (S2) an actual material of the sealing structure of the oil well pipe connection, based on the sealing surface contact compressive stress, the sealing structure material elastic strain, and the sealing structure material strength; and
   using the actual material and the sealing surface contact width as the manufacturing parameters for the sealing structure, determining a size of the sealing structure based on the elastic strain of the actual material and the sealing surface contact width and manufacturing (S3) the sealing structure by applying the actual material.

2. The method for determining manufacturing parameters for a sealing structure of an oil well pipe connection according to claim 1, wherein determining the size of the sealing structure based on the elastic strain of the actual material and the sealing surface contact width and manufacturing (S3) the sealing structure by applying the actual material comprises:

   including a sealing overlay layer in the sealing structure by
   determining a thickness of the sealing overlay layer according to a second formula

$$\begin{cases} \theta = \dfrac{1}{2}(D_{ps} - d_{bs}) = \theta_e + \theta_s \\ \theta_e = \varepsilon_e t \\ \theta_s = \varepsilon_s D \end{cases} ;$$

determining a size of the sealing overlay layer based on the thickness of the sealing overlay layer and the sealing surface contact width; and

fabricating the sealing overlay layer with the actual material according to the size of the sealing overlay layer, wherein, $\theta$ represents a radial interference of the sealing surface, $D_{ps}$ represents an outer diameter of a sealing surface of a pin threaded connection, $d_{bs}$ represents an inner diameter of a sealing surface of a box threaded connection, $\theta_e$ represents a radial interference of the sealing structure made of the actual material, $\theta_s$ represents a radial deformation of a sealing structure of an original oil well pipe connection, $\varepsilon_e$ represents the elastic strain of the actual material, $t$ represents the thickness of the sealing overlay layer, $\varepsilon_s$ represents an elastic strain of an original connection material of the oil well pipe, and $D$ represents a circumferential diameter of the sealing surface, and

wherein fabricating the sealing overlay layer with the actual material according to the size of the sealing overlay layer comprises:

fabricating the sealing overlay layer with the actual material according to the size of the sealing overlay layer employing any one of built-up welding, spraying, electroplating, and 3D printing.

3. The method for determining manufacturing parameters for a sealing structure of an oil well pipe connection according to claim 1, wherein determining the size of the sealing structure based on the elastic strain of the actual material and the sealing surface contact width and manufacturing (S3) the sealing structure by applying the actual material comprises:

including a sealing ring in the sealing structure by
determining a thickness of the sealing ring and an outer diameter of the middle of
the sealing ring according to a third formula

$$\begin{cases} \theta = \dfrac{1}{2}(D_{ps} - (d_{bs} - 2t)) = \theta_e + \theta_s \\ \theta_e = \varepsilon_e t \\ \theta_s = \varepsilon_s D \\ D_{s1} = d_{bs} \end{cases} ;$$

determining a size of the sealing ring based on the thickness of the sealing ring and the sealing surface contact width; and

fabricating the sealing ring with the actual material according to the size of the sealing ring, wherein, $\theta$ represents a radial interference of the sealing surface, $D_{ps}$ represents an outer diameter of a sealing surface of a pin threaded connection, $d_{bs}$ represents an inner diameter of a sealing surface of a box threaded connection, $\theta_e$ represents a radial interference of the sealing structure made of the actual material, $\theta_s$ represents a radial deformation of a sealing structure of an original oil well pipe connection, $\varepsilon_e$ represents the elastic strain of the actual material, $t$ represents the thickness of the sealing ring, $\varepsilon_s$ represents an elastic strain of an original connection material of the oil well pipe, $D$ represents a circumferential diameter of the sealing surface, and $D_{s1}$ represents the outer diameter of the middle of the sealing ring.

4. The method for determining manufacturing parameters for a sealing structure of an oil well pipe connection according to claim 1, wherein determining the size of the sealing structure based on the elastic strain of the actual material and the sealing surface contact width and manufacturing (S3) the sealing structure by applying the actual material comprises:

including a sealing ring in the sealing structure by
determining a thickness of the sealing ring according to a fourth formula

$$\begin{cases} \theta = t - h = \theta_e + \theta_s \\ \theta_e = \varepsilon_e t \end{cases} ;$$

determining a size of the sealing ring based on the thickness of the sealing ring and the sealing surface contact width; and
fabricating the sealing ring with the actual material according to the size of the sealing ring,
wherein, $\theta$ represents an interference of the sealing surface, $t$ represents the thickness of the sealing ring, $h$ represents a shoulder clearance of the oil well pipe connection, $\theta_e$ represents an interference of the sealing structure made of the actual material, $\theta_s$ represents an interference of a torque shoulder of an original oil well pipe connection, and $\varepsilon_e$ represents the elastic strain of the actual material.

5. The method for determining manufacturing parameters for a sealing structure of an oil well pipe connection according to claim 1, wherein determining the size of the sealing structure based on the elastic strain of the actual material and the sealing surface contact width and manufacturing (S3) the sealing structure by applying the actual material comprises:

including a sealing ring in the sealing structure by
determining a thickness of the sealing ring according to a fifth formula

$$\begin{cases} \theta = t - 2J = \theta_e + \theta_s \\ \theta_e = \varepsilon_e t \end{cases} ;$$

determining a size of the sealing ring based on the thickness of the sealing ring and the sealing surface contact width; and
fabricating the sealing ring with the actual material according to the size of the sealing ring,
wherein, $\theta$ represents an interference of the sealing surface, $t$ represents the thickness of the sealing ring, J represents a half of the distance between ends of two pin threaded connections when a box threaded connection is tightened to the two pin threaded connections, $\theta_e$ represents an interference of the sealing structure made of the actual material, $\theta_s$ represents an interference of the pin threaded connections of an original oil well pipe, and $\varepsilon_e$ represents the elastic strain of the actual material.

6. The method for determining manufacturing parameters for a sealing structure of an oil well pipe connection according to any one of claims 1 to 5, wherein the elastic strain of the actual material is greater than 0.5%.

7. The method for determining manufacturing parameters for a sealing structure of an oil well pipe connection according to claim 1, wherein the actual material comprises a shape memory alloy having a superelastic effect.

8. A sealing overlay layer formed at the seal of an oil well pipe connection, **characterized in that**, the sealing overlay layer is manufactured by using the actual material that is determined by using the method according to any one of claims 1 to 7, and the actual material of the sealing overlay layer comprises a shape memory alloy having a superelastic effect.

9. A method for sealing an oil well pipe connection, comprising: determining manufacturing parameters for a sealing structure using the method according to any one of claims 1 to 7, obtaining the sealing structure, and sealing the oil well pipe connection by using the sealing structure.

10. The method for sealing an oil well pipe connection according to claim 9, wherein, in the case that the sealing overlay layer fabricated according to the second formula is adopted, sealing the oil well pipe connection comprises:

   determining, according to the second formula, an outer diameter of a sealing surface of a pin threaded connection and an inner diameter of a sealing surface of a box threaded connection, and determining the sealing structure of the oil well pipe connection based on the outer diameter of the sealing surface of the pin threaded connection and the inner diameter of the sealing surface of the box threaded connection, wherein the sealing structure comprises the box threaded connection and the pin threaded connection; and
   arranging the sealing overlay layer on a sealing contact surface of the box threaded connection or the pin threaded connection to seal the oil well pipe connection.

11. The method for sealing an oil well pipe connection according to claim 9, wherein in the case that the sealing ring fabricated according to the third formula is adopted, sealing the oil well pipe connection comprises:

   determining, according to the third formula, an outer diameter of a sealing surface of a pin threaded connection and an inner diameter of a sealing surface of a box threaded connection, and determining the sealing structure of the oil well pipe connection based on the outer diameter of the sealing surface of the pin threaded connection and the inner diameter of the sealing surface of the box threaded connection, wherein the sealing structure comprises the box threaded connection and the pin threaded connection; and
   arranging the sealing ring in a gap between the box threaded connection and the pin threaded connection to seal the oil well pipe connection.

12. The method for sealing an oil well pipe connection according to claim 9, wherein in the case that the sealing ring fabricated according to the fourth formula is adopted, sealing the oil well pipe connection comprises:

   determining, according to the fourth formula, a shoulder clearance of the oil well pipe connection, and determining the sealing structure of the oil well pipe connection based on the torque shoulder clearance of the oil well pipe connection, wherein the sealing structure comprises a box threaded connection and a pin threaded connection: and
   arranging the sealing ring in the torque shoulder clearance of the oil well pipe connection to seal the oil well pipe connection.

13. The method for sealing an oil well pipe connection according to claim 9, wherein in the case that the sealing ring fabricated according to the fifth formula is adopted, sealing the oil well pipe connection comprises:

   determining the sealing structure of the oil well pipe connection based on a half of the distance between ends of two pin threaded connections when a box threaded connection is tightened to the two pin threaded connections according to the fifth formula, wherein the sealing structure comprises the box threaded connection and the pin threaded connection; and
   arranging the sealing ring at a clearance between the ends of the two pin threaded connections after the box threaded connection is tightened to the two pin threaded connections, to seal the oil well pipe connection.

14. A method for designing an oil well pipe connection, comprising: applying the actual material, the sealing structure material elastic strain, and the sealing surface contact width that are obtained by using the method for determining manufacturing parameters for a sealing structure of an oil well pipe connection according to any one of claims 1 to 7 to design the sealing structure of the oil well pipe connection.


**Patentansprüche**

1. Verfahren zum Bestimmen von Herstellungsparametern für eine Dichtungsstruktur einer Ölbohrrohrverbindung, **dadurch gekennzeichnet, dass** es umfasst:

   Bestimmen (S1) einer Dichtungsflächen-Kontaktdruckspannung, einer elastischen Dehnung des Dichtungsstrukturmaterials, einer Festigkeit des Dichtungsstrukturmaterials und einer Dichtungsflächen-Kontaktbreite des Ölbohrrohrs durch Verwenden einer ersten Formel basierend auf einer Regel, dass ein Kontaktdruckspannungsparameter, ein elastischer Dehnungsparameter und ein Festigkeitsparameter des Ölbohrrohrs größer als oder gleich einer Kontaktdruckspannungssicherheitsmarge, einer elastischen Dehnungssicherheitsmarge bzw. einer Festigkeitssicherheitsmarge des Ölbohrrohrs sind, wobei die Kontaktdruckspannungssicherheitsmarge $k_{\sigma s} \geq 0{,}2$, die elastische Dehnungssicherheitsmarge $k_{\varepsilon s} \geq 0{,}2$, und die Festigkeitssicherheitsmarge $k_{ys} \geq 0{,}2$, wobei die erste Formel wie folgt gezeigt wird:

$$
\left\{
\begin{array}{l}
k_{\sigma} = \dfrac{\sigma_e - P}{P} \\[2ex]
k_{\varepsilon} = \dfrac{\varepsilon_e - \delta}{\delta} \\[2ex]
k_y = \dfrac{\sigma_y - \dfrac{PD}{2\pi L}}{\sigma_y}
\end{array}
\right.
$$

wobei $k_{\sigma}$ einen Kontaktdruckspannungsparameter darstellt, $\sigma_e$ eine Dichtungsflächen-Kontaktdruckspannung darstellt, $P$ einen Druck des in der Leitung eingeschlossenen Gases darstellt, $k_{\varepsilon}$ einen elastischen Dehnungsparameter darstellt, $\varepsilon_e$ eine elastische Dehnung einer Dichtungsstruktur oder eines Dichtungsflächenmaterials darstellt, $\delta$ ein lokales Spiel einer Dichtungsoberfläche darstellt, $k_y$ einen Festigkeitsparameter darstellt, $\sigma_y$ eine Streckgrenze einer Dichtungsstruktur oder eines Dichtungsflächenmaterials darstellt, $D$ einen Umfangsdurchmesser einer Dichtungsfläche darstellt und $L$ eine Dichtungsflächen-Kontaktbreite darstellt;

Bestimmen (S2) eines tatsächlichen Materials des Dichtungsstrukturmaterials der Ölbohrrohrverbindung basierend auf der Dichtungsflächen-Kontaktdruckspannung, der elastischen Dehnung des Dichtungsstrukturmaterials und der Festigkeit des Dichtungsstrukturmaterials; und

Verwenden des tatsächlichen Materials und der Dichtungsflächen-Kontaktbreite als die Herstellungsparameter für die Dichtungsstruktur, Bestimmen einer Größe der Dichtungsstruktur basierend auf der elastischen Dehnung des tatsächlichen Materials und der Dichtungsflächen-Kontaktbreite und Herstellen (S3) der Dichtungsstruktur durch Anwenden des tatsächlichen Materials.

2. Verfahren zum Bestimmen der Herstellungsparameter für eine Dichtungsstruktur einer Ölbohrrohrverbindung nach Anspruch 1, wobei das Bestimmen der Größe der Dichtungsstruktur basierend auf der elastischen Dehnung des tatsächlichen Materials und der Dichtungsflächen-Kontaktbreite und das Herstellen (S3) der Dichtungsstruktur durch Anwenden des tatsächlichen Materials umfasst:

Einschließen einer Dichtungsdeckschicht in die Dichtungsstruktur durch Bestimmen einer Dicke der Dichtungsdeckschicht gemäß einer zweiten Formel

$$\begin{cases} \theta = \dfrac{1}{2}(D_{ps} - d_{bs}) = \theta_e + \theta_s \\[2mm] \theta_e = \varepsilon_e t \\[2mm] \theta_s = \varepsilon_s D \end{cases} \quad ;$$

Bestimmen einer Größe der Dichtungsdeckschicht basierend auf der Dicke der Dichtungsdeckschicht und der Dichtungsflächen-Kontaktbreite; und

Herstellen der Dichtungsdeckschicht mit dem tatsächlichen Material gemäß der Größe der Dichtungsdeckschicht,

wobei $\theta$ eine radiale Interferenz der Dichtungsfläche darstellt, $D_{ps}$ einen Außendurchmesser einer Dichtungsfläche einer Bolzengewindeverbindung darstellt, $d_{bs}$ einen Innendurchmesser einer Dichtungsfläche einer Kastengewindeverbindung darstellt, $\theta_e$ eine radiale Interferenz der Dichtungsstruktur aus dem tatsächlichen Material darstellt, $\theta_s$ eine radiale Verformung einer Dichtungsstruktur einer ursprünglichen Ölbohrrohrverbindung darstellt, $\varepsilon_e$ die elastische Dehnung des tatsächlichen Materials darstellt, $t$ die Dicke der Dichtungsdeckschicht darstellt, $\varepsilon_s$ eine elastische Dehnung eines ursprünglichen Verbindungsmaterials des Ölbohrrohrs darstellt, und $D$ einen Umfangsdurchmesser der Dichtungsfläche darstellt, und

wobei ein Herstellen der Dichtungsdeckschicht mit dem tatsächlichen Material gemäß der Größe der Dichtungsdeckschicht umfasst:

Herstellen der Dichtungsdeckschicht mit dem tatsächlichen Material gemäß der Größe der Dichtungsdeckschicht unter Einsatz eines von Auftragsschweißen, Spritzen, Galvanisieren und 3D-Druck.

3. Verfahren zum Bestimmen der Herstellungsparameter für eine Dichtungsstruktur einer Ölbohrrohrverbindung nach Anspruch 1, wobei das Bestimmen der Größe der Dichtungsstruktur basierend auf der elastischen Dehnung des tatsächlichen Materials und der Dichtungsflächen-Kontaktbreite und das Herstellen (S3) der Dichtungsstruktur durch Anwenden des tatsächlichen Materials umfasst:

Einschließen eines Dichtungsrings in die Dichtungsstruktur durch Bestimmen einer Dicke des Dichtungsrings und eines Außendurchmessers der Mitte des Dichtungsrings gemäß einer dritten Formel

$$\begin{cases} \theta = \dfrac{1}{2}(D_{ps} - (d_{bs} - 2t)) = \theta_e + \theta_s \\[2mm] \theta_e = \varepsilon_e t \\[2mm] \theta_s = \varepsilon_s D \\[2mm] D_{s1} = d_{bs} \end{cases} \quad ;$$

Bestimmen einer Größe des Dichtungsrings basierend auf der Dicke des Dichtungsrings und der Dichtungsflächen-Kontaktbreite; und

Herstellen des Dichtungsrings mit dem tatsächlichen Material gemäß der Größe des Dichtungsrings,

wobei $\theta$ eine radiale Interferenz der Dichtungsfläche darstellt, $D_{ps}$ einen Außendurchmesser einer Dichtungsfläche einer Bolzengewindeverbindung darstellt, $d_{bs}$ einen Innendurchmesser einer Dichtungsfläche einer Kastengewindeverbindung darstellt, $\theta_e$ eine radiale Interferenz der Dichtungsstruktur aus dem tatsächlichen Material darstellt, $\theta_s$ eine radiale Verformung einer Dichtungsstruktur einer ursprünglichen Ölbohrrohrverbindung darstellt, $\varepsilon_e$ die elastische Dehnung des tatsächlichen Materials darstellt, $t$ die Dicke des Dichtungsrings darstellt,

$\varepsilon_s$ eine elastische Dehnung eines ursprünglichen Verbindungsmaterials des Ölbohrrohrs darstellt, $D$ einen Umfangsdurchmesser der Dichtungsfläche darstellt, und $D_s 1$ den Außendurchmesser der Mitte des Dichtungsrings darstellt.

4. Verfahren zum Bestimmen der Herstellungsparameter für eine Dichtungsstruktur einer Ölbohrrohrverbindung nach Anspruch 1, wobei das Bestimmen der Größe der Dichtungsstruktur basierend auf der elastischen Dehnung des tatsächlichen Materials und der Dichtungsflächen-Kontaktbreite und das Herstellen (S3) der Dichtungsstruktur durch Anwenden des tatsächlichen Materials umfasst:

Einschließen eines Dichtungsrings in die Dichtungsstruktur durch Bestimmen einer Dicke des Dichtungsrings gemäß einer vierten Formel

$$\begin{cases} \theta = t - h = \theta_e + \theta_s \\ \theta_e = \varepsilon_e t \end{cases};$$

Bestimmen einer Größe des Dichtungsrings basierend auf der Dicke des Dichtungsrings und der Dichtungsflächen-Kontaktbreite; und
Herstellen des Dichtungsrings mit dem tatsächlichen Material gemäß der Größe des Dichtungsrings, wobei $\theta$ eine Interferenz der Dichtungsfläche darstellt, $t$ die Dicke des Dichtungsrings darstellt, $h$ ein Schulterspiel der Ölbohrrohrverbindung darstellt, $\theta_e$ eine Interferenz der Dichtungsstruktur aus dem tatsächlichen Material darstellt, $\theta_s$ eine Interferenz einer Drehmomentschulter einer ursprünglichen Ölbohrrohrverbindung darstellt, und $\varepsilon_e$ die elastische Dehnung des tatsächlichen Materials darstellt.

5. Verfahren zum Bestimmen der Herstellungsparameter für eine Dichtungsstruktur einer Ölbohrrohrverbindung nach Anspruch 1, wobei das Bestimmen der Größe der Dichtungsstruktur basierend auf der elastischen Dehnung des tatsächlichen Materials und der Dichtungsflächen-Kontaktbreite und das Herstellen (S3) der Dichtungsstruktur durch Anwenden des tatsächlichen Materials umfasst:

Einschließen eines Dichtungsrings in die Dichtungsstruktur durch Bestimmen einer Dicke des Dichtungsrings gemäß einer fünften Formel

$$\begin{cases} \theta = t - 2J = \theta_e + \theta_s \\ \theta_e = \varepsilon_e t \end{cases};$$

Bestimmen einer Größe des Dichtungsrings basierend auf der Dicke des Dichtungsrings und der Dichtungsflächen-Kontaktbreite; und
Herstellen des Dichtungsrings mit dem tatsächlichen Material gemäß der Größe des Dichtungsrings, wobei $\theta$ eine Interferenz der Dichtungsfläche darstellt, $t$ die Dicke des Dichtungsrings darstellt, $J$ die Hälfte des Abstands zwischen den Enden von zwei Bolzengewindeverbindungen darstellt, wenn eine Kastengewindeverbindung an den beiden Bolzengewindeverbindungen festgezogen wird, $\theta_e$ eine Interferenz der Dichtungsstruktur aus dem tatsächlichen Material darstellt, $\theta_s$ eine Interferenz der Bolzengewindeverbindungen eines ursprünglichen Ölbohrrohrs darstellt, und $\varepsilon_e$ die elastische Dehnung des tatsächlichen Materials darstellt.

6. Verfahren zum Bestimmen der Herstellungsparameter für eine Dichtungsstruktur einer Ölbohrrohrverbindung nach einem der Ansprüche 1 bis 5, wobei die elastische Dehnung des tatsächlichen Materials größer als 0,5 % ist.

7. Verfahren zum Bestimmen der Herstellungsparameter für eine Dichtungsstruktur einer Ölbohrrohrverbindung nach Anspruch 1, wobei das tatsächliche Material eine Formgedächtnislegierung mit superelastischem Effekt umfasst.

8. Dichtungsdeckschicht, die an der Dichtung einer Ölbohrrohrverbindung ausgebildet ist, **dadurch gekennzeichnet, dass**,

die Dichtungsdeckschicht durch Verwenden des tatsächlichen Materials hergestellt wird, das durch Verwenden des Verfahrens nach einem der Ansprüche 1 bis 7 bestimmt wird, und das tatsächliche Material der Dichtungsdeckschicht eine Formgedächtnislegierung mit superelastischem Effekt umfasst.

9. Verfahren zum Abdichten einer Ölbohrrohrverbindung, umfassend:

Bestimmen der Herstellungsparameter für eine Dichtungsstruktur unter Verwendung des Verfahrens nach einem der vorstehenden Ansprüche 1 bis 7, Erhalten der Dichtungsstruktur und Abdichten der Ölbohrrohrverbindung durch Verwenden der Dichtungsstruktur.

10. Verfahren zum Abdichten einer Ölbohrrohrverbindung nach Anspruch 9, wobei, in dem Fall, dass die gemäß der zweiten Formel hergestellte Dichtungsdeckschicht übernommen wird, das Abdichten der Ölbohrrohrverbindung umfasst:

Bestimmen, gemäß der zweiten Formel, eines Außendurchmessers einer Dichtungsfläche einer Bolzengewindeverbindung und eines Innendurchmessers einer Dichtungsfläche einer Kastengewindeverbindung, und Bestimmen der Dichtungsstruktur der Ölbohrrohrverbindung basierend auf dem Außendurchmesser der Dichtungsfläche der Bolzengewindeverbindung und dem Innendurchmesser der Dichtungsfläche der Kastengewindeverbindung, wobei die Dichtungsstruktur die Kastengewindeverbindung und die Bolzengewindeverbindung umfasst; und
Anordnen der Dichtungsdeckschicht auf einer Dichtungsfläche der Kastengewindeverbindung oder der Bolzengewindeverbindung zum Abdichten der Ölbohrrohrverbindung.

11. Verfahren zum Abdichten einer Ölbohrrohrverbindung nach Anspruch 9, wobei, in dem Fall, dass der gemäß der dritten Formel hergestellte Dichtungsring übernommen wird, das Abdichten der Ölbohrrohrverbindung umfasst:

Bestimmen, gemäß der dritten Formel, eines Außendurchmessers einer Dichtungsfläche einer Bolzengewindeverbindung und eines Innendurchmessers einer Dichtungsfläche einer Kastengewindeverbindung, und Bestimmen der Dichtungsstruktur der Ölbohrrohrverbindung basierend auf dem Außendurchmesser der Dichtungsfläche der Bolzengewindeverbindung und dem Innendurchmesser der Dichtungsfläche der Kastengewindeverbindung, wobei die Dichtungsstruktur die Kastengewindeverbindung und die Bolzengewindeverbindung umfasst; und
Anordnen des Dichtungsrings in einem Spalt zwischen der Kastengewindeverbindung und der Bolzengewindeverbindung zum Abdichten der Ölbohrrohrverbindung.

12. Verfahren zum Abdichten einer Ölbohrrohrverbindung nach Anspruch 9, wobei, in dem Fall, dass der gemäß der vierten Formel hergestellte Dichtungsring übernommen wird, das Abdichten der Ölbohrrohrverbindung umfasst:

Bestimmen, gemäß der vierten Formel, eines Schulterspiels der Ölbohrrohrverbindung und Bestimmen der Dichtungsstruktur der Ölbohrrohrverbindung basierend auf dem Drehmomentschulterspiel der Ölbohrrohrverbindung, wobei die Dichtungsstruktur eine Kastengewindeverbindung und eine Bolzengewindeverbindung umfasst: und
Anordnen des Dichtungsrings in dem Drehmomentschulterspiel der Ölbohrrohrverbindung zum Abdichten der Ölbohrrohrverbindung.

13. Verfahren zum Abdichten einer Ölbohrrohrverbindung nach Anspruch 9, wobei, in dem Fall, dass der gemäß der fünften Formel hergestellte Dichtungsring übernommen wird, das Abdichten der Ölbohrrohrverbindung umfasst:

Bestimmen der Dichtungsstruktur der Ölbohrrohrverbindung basierend auf der Hälfte des Abstands zwischen den Enden von zwei Bolzengewindeverbindungen, wenn eine Kastengewindeverbindung an den beiden Bolzengewindeverbindungen gemäß der fünften Formel festgezogen wird, wobei die Dichtungsstruktur die Kastengewindeverbindung und die Bolzengewindeverbindung umfasst; und
Anordnen des Dichtungsrings bei einem Spiel zwischen den Enden der zwei Bolzengewindeverbindungen, nachdem die Kastengewindeverbindung an den zwei Bolzengewindeverbindungen festgezogen wurde, um die Ölbohrrohrverbindung abzudichten.

14. Verfahren zum Gestalten einer Ölbohrrohrverbindung, umfassend:
Anwenden des tatsächlichen Materials, der elastischen Dehnung des Dichtungsstrukturmaterials und der Dichtungsflächen-Kontaktbreite, die durch Verwenden des Verfahrens zum Bestimmen der Herstellungsparameter für eine Dichtungsstruktur einer Ölbohrrohrverbindung nach einem der Ansprüche 1 bis 7 erhalten werden, um die Dichtungsstruktur der Ölbohrrohrverbindung zu gestalten.

## Revendications

1. Procédé de détermination de paramètres de fabrication pour une structure d'étanchéité d'un raccord de tige de puits de pétrole, **caractérisé en ce qu'**il comprend :

   la détermination (S1) d'une contrainte de compression de contact de surface d'étanchéité, d'une contrainte élastique de matériau de structure d'étanchéité, d'une résistance de matériau de structure d'étanchéité et d'une largeur de contact de surface d'étanchéité de la tige de puits de pétrole par l'utilisation d'une première formule sur la base d'une règle selon laquelle un paramètre de contrainte de compression de contact, un paramètre de contrainte élastique et un paramètre de résistance de la tige de puits de pétrole sont supérieurs ou égaux à une marge de sécurité de contrainte de compression de contact, une marge de sécurité de contrainte élastique et une marge de sécurité de résistance de la tige de puits de pétrole respectivement, dans lequel la marge de sécurité de contrainte de compression de contact $k_{\sigma s} \geq 0{,}2$ ; la marge de sécurité *élastique* $k_{\varepsilon s} \geq 0{,}2$ et la marge de sécurité de résistance $k_{ys} \geq 0{,}2$ ; dans lequel la première formule est indiquée comme suit :

$$\begin{cases} k_\sigma = \dfrac{\sigma_e - P}{P} \\[2em] k_\varepsilon = \dfrac{\varepsilon_e - \delta}{\delta} \\[2em] k_y = \dfrac{\sigma_y - \dfrac{PD}{2\pi L}}{\sigma_y} \end{cases}$$

   où, $k_\sigma$ représente un paramètre de contrainte de compression de contact, $\sigma_e$ représente une contrainte de compression de contact de surface d'étanchéité, $P$ représente une pression de gaz scellé dans la tige, $k_\varepsilon$ représente un paramètre de contrainte élastique, $\varepsilon_e$ représente une contrainte élastique d'une structure d'étanchéité ou d'un matériau de surface d'étanchéité, $\delta$ représente un jeu local d'une surface d'étanchéité, $k_y$ représente un paramètre de résistance, $\sigma_y$ représente une limite d'élasticité d'une structure d'étanchéité ou d'un matériau de surface d'étanchéité, D représente un diamètre circonférentiel d'une surface d'étanchéité, et *L* représente une largeur de contact de surface d'étanchéité ;
   la détermination (S2) d'un matériau réel de la structure d'étanchéité du raccord de tige de puits de pétrole, sur la base de la contrainte de compression de contact de surface d'étanchéité, de la contrainte élastique de matériau de structure d'étanchéité et de la résistance de matériau de structure d'étanchéité ; et
   l'utilisation du matériau réel et de la largeur de contact de surface d'étanchéité en tant que paramètres de fabrication pour la structure d'étanchéité, la détermination d'une taille de la structure d'étanchéité sur la base de la contrainte élastique du matériau réel et de la largeur de contact de surface d'étanchéité et la fabrication (S3) de la structure d'étanchéité par application du matériau réel.

2. Procédé de détermination de paramètres de fabrication pour une structure d'étanchéité d'un raccord de tige de puits de pétrole selon la revendication 1, dans lequel la détermination de la taille de la structure d'étanchéité sur la base de la contrainte élastique du matériau réel et de la largeur de contact de surface d'étanchéité et la fabrication (S3) de la structure d'étanchéité par application du matériau réel comprennent :

l'inclusion d'une couche de recouvrement d'étanchéité dans la structure d'étanchéité par détermination d'une épaisseur de la couche de recouvrement d'étanchéité selon une deuxième formule

$$\begin{cases} \theta = \dfrac{1}{2}(D_{ps} - d_{bs}) = \theta_e + \theta_s \\ \theta_e = \varepsilon_e t \\ \theta_s = \varepsilon_s D \end{cases} ;$$

la détermination d'une taille de la couche de recouvrement d'étanchéité sur la base de l'épaisseur de la couche de recouvrement d'étanchéité et de la largeur de contact de surface d'étanchéité ; et

la fabrication de la couche de recouvrement d'étanchéité avec le matériau réel selon la taille de la couche de recouvrement d'étanchéité,

où, $\theta$ représente une interférence radiale de la surface d'étanchéité, $D_{ps}$ représente un diamètre externe d'une surface d'étanchéité d'un raccord fileté mâle, $d_{bs}$ représente un diamètre interne d'une surface d'étanchéité d'un raccord fileté femelle, $\theta_e$ représente une interférence radiale de la structure d'étanchéité constituée du matériau réel, $\theta_s$ représente une déformation radiale d'une structure d'étanchéité d'un raccord de tige de puits de pétrole d'origine, $\varepsilon_e$ représente la contrainte élastique du matériau réel, $t$ représente l'épaisseur de la couche de recouvrement d'étanchéité, $\varepsilon_s$ représente une contrainte élastique d'un matériau de raccord d'origine de la tige de puits de pétrole, et $D$ représente un diamètre circonférentiel de la surface d'étanchéité, et

dans lequel la fabrication de la couche de recouvrement d'étanchéité avec le matériau réel selon la taille de la couche de recouvrement d'étanchéité comprend :

la fabrication de la couche de recouvrement d'étanchéité avec le matériau réel selon la taille de la couche de recouvrement d'étanchéité par l'emploi de l'un quelconque parmi un soudage en passes superposées, une pulvérisation, un placage électrolytique et une impression 3D.

3. Procédé de détermination de paramètres de fabrication pour une structure d'étanchéité d'un raccord de tige de puits de pétrole selon la revendication 1, dans lequel la détermination de la taille de la structure d'étanchéité sur la base de la contrainte élastique du matériau réel et de la largeur de contact de surface d'étanchéité et la fabrication (S3) de la structure d'étanchéité par application du matériau réel comprennent :

l'inclusion d'une bague d'étanchéité dans la structure d'étanchéité par

détermination d'une épaisseur de la bague d'étanchéité et d'un diamètre externe du milieu de la bague d'étanchéité selon une troisième formule

$$\begin{cases} \theta = \dfrac{1}{2}(D_{ps} - (d_{bs} - 2t)) = \theta_e + \theta_s \\ \theta_e = \varepsilon_e t \\ \theta_s = \varepsilon_s D \\ D_{s1} = d_{bs} \end{cases} ;$$

la détermination d'une taille de la bague d'étanchéité sur la base de l'épaisseur de la bague d'étanchéité et de la largeur de contact de surface d'étanchéité ; et

la fabrication de la bague d'étanchéité avec le matériau réel selon la taille de la bague d'étanchéité,

où, $\theta$ représente une interférence radiale de la surface d'étanchéité, $D_{ps}$ représente un diamètre externe d'une surface d'étanchéité d'un raccord fileté mâle, $d_{bs}$ représente un diamètre interne d'une surface d'étanchéité d'un raccord fileté femelle, $\theta_e$ représente une interférence radiale de la structure d'étanchéité constituée du matériau réel, $\theta_s$ représente une déformation radiale d'une structure d'étanchéité d'un raccord de tige de puits de pétrole d'origine, $\varepsilon_e$ représente la contrainte élastique du matériau réel, $t$ représente l'épaisseur de la bague d'étanchéité, $\varepsilon_s$ représente une contrainte élastique d'un matériau de raccord d'origine de la tige de puits de pétrole, $D$ représente un diamètre circonférentiel de la surface d'étanchéité, et $D_{s1}$ représente le diamètre externe du milieu de la bague d'étanchéité.

4. Procédé de détermination de paramètres de fabrication pour une structure d'étanchéité d'un raccord de tige de puits de pétrole selon la revendication 1, dans lequel la détermination de la taille de la structure d'étanchéité sur la base de la contrainte élastique du matériau réel et de la largeur de contact de surface d'étanchéité et la fabrication (S3) de la structure d'étanchéité par application du matériau réel comprennent :

l'inclusion d'une bague d'étanchéité dans la structure d'étanchéité par
détermination d'une épaisseur de la bague d'étanchéité selon une quatrième formule

$$\begin{cases} \theta = t - h = \theta_e + \theta_s \\ \theta_e = \varepsilon_e t \end{cases} ;$$

la détermination d'une taille de la bague d'étanchéité sur la base de l'épaisseur de la bague d'étanchéité et de la largeur de contact de surface d'étanchéité ; et
la fabrication de la bague d'étanchéité avec le matériau réel selon la taille de la bague d'étanchéité,
où, $\theta$ représente une interférence de la surface d'étanchéité, $t$ représente l'épaisseur de la bague d'étanchéité, $h$ représente un jeu d'épaulement du raccord de tige de puits de pétrole, $\theta_e$ représente une interférence de la structure d'étanchéité constituée du matériau réel, $\theta_s$ représente une interférence d'un épaulement de couple d'un raccord de tige de puits de pétrole d'origine, et $\varepsilon_e$ représente la contrainte élastique du matériau réel.

5. Procédé de détermination de paramètres de fabrication pour une structure d'étanchéité d'un raccord de tige de puits de pétrole selon la revendication 1, dans lequel la détermination de la taille de la structure d'étanchéité sur la base de la contrainte élastique du matériau réel et de la largeur de contact de surface d'étanchéité et la fabrication (S3) de la structure d'étanchéité par application du matériau réel comprennent :

l'inclusion d'une bague d'étanchéité dans la structure d'étanchéité par
détermination d'une épaisseur de la bague d'étanchéité selon une cinquième formule

$$\begin{cases} \theta = t - 2J = \theta_e + \theta_s \\ \theta_e = \varepsilon_e t \end{cases} ;$$

la détermination d'une taille de la bague d'étanchéité sur la base de l'épaisseur de la bague d'étanchéité et de la largeur de contact de surface d'étanchéité ; et
la fabrication de la bague d'étanchéité avec le matériau réel selon la taille de la bague d'étanchéité,
où, $\theta$ représente une interférence de la surface d'étanchéité, $t$ représente l'épaisseur de la bague d'étanchéité, $J$ représente une moitié d'une distance entre des extrémités de deux raccords filetés mâles lorsqu'un raccord fileté femelle est serré sur les deux raccords filetés mâles, $\theta_e$ représente une interférence de la structure d'étanchéité constituée du matériau réel, $\theta_s$ représente une interférence des raccords filetés mâles d'un raccord de tige de puits de pétrole d'origine, et $\varepsilon_e$ représente la contrainte élastique du matériau réel.

6. Procédé de détermination de paramètres de fabrication pour une structure d'étanchéité d'un raccord de tige de puits de pétrole selon l'une quelconque des revendications 1 à 5, dans lequel la contrainte élastique du matériau réel est supérieure à 0,5 %.

7. Procédé de détermination de paramètres de fabrication pour une structure d'étanchéité d'un raccord de tige de puits de pétrole selon la revendication 1, dans lequel le matériau réel comprend un alliage à mémoire de forme ayant un effet superélastique.

8. Couche de recouvrement d'étanchéité formée au niveau du joint d'étanchéité d'un raccord de tige de puits de pétrole, **caractérisée en ce que**,
la couche de recouvrement d'étanchéité est fabriquée par l'utilisation du matériau réel qui est déterminé par l'utilisation du procédé selon l'une quelconque des revendications 1 à 7, et le matériau réel de la couche de recouvrement d'étanchéité comprend un alliage à mémoire de forme ayant un effet superélastique.

9. Procédé d'étanchéification d'un raccord de tige de puits de pétrole, comprenant :
la détermination de paramètres de fabrication pour une structure d'étanchéité à l'aide du procédé selon l'une quelconque des revendications 1 à 7, l'obtention de la structure d'étanchéité, et l'étanchéification du raccord de tige de puits de pétrole par l'utilisation de la structure d'étanchéité.

10. Procédé d'étanchéification d'un raccord de tige de puits de pétrole selon la revendication 9, dans lequel, dans le cas où la couche de recouvrement d'étanchéité fabriquée selon la deuxième formule est adoptée, l'étanchéification du raccord de tige de puits de pétrole comprend :

la détermination, selon la deuxième formule, d'un diamètre externe d'une surface d'étanchéité d'un raccord fileté mâle et d'un diamètre interne d'une surface d'étanchéité d'un raccord fileté femelle, et la détermination de la structure d'étanchéité du raccord de tige de puits de pétrole sur la base du diamètre externe de la surface d'étanchéité du raccord fileté mâle et du diamètre interne de la surface d'étanchéité du raccord fileté femelle, dans lequel la structure d'étanchéité comprend le raccord fileté femelle et le raccord fileté mâle ; et
l'agencement de la couche de recouvrement d'étanchéité sur une surface de contact d'étanchéité du raccord fileté femelle ou du raccord fileté mâle pour étanchéifier le raccord de tige de puits de pétrole.

11. Procédé d'étanchéification d'un raccord de tige de puits de pétrole selon la revendication 9, dans lequel dans le cas où la bague d'étanchéité fabriquée selon la troisième formule est adoptée, l'étanchéification du raccord de tige de puits de pétrole comprend :

la détermination, selon la troisième formule, d'un diamètre externe d'une surface d'étanchéité d'un raccord fileté mâle et d'un diamètre interne d'une surface d'étanchéité d'un raccord fileté femelle, et la détermination de la structure d'étanchéité du raccord de tige de puits de pétrole sur la base du diamètre externe de la surface d'étanchéité du raccord fileté mâle et du diamètre interne de la surface d'étanchéité du raccord fileté femelle, dans lequel la structure d'étanchéité comprend le raccord fileté femelle et le raccord fileté mâle ; et
l'agencement de la bague d'étanchéité dans un écartement entre le raccord fileté femelle et le raccord fileté mâle pour étanchéifier le raccord de tige de puits de pétrole.

12. Procédé d'étanchéification d'un raccord de tige de puits de pétrole selon la revendication 9, dans lequel dans le cas où la bague d'étanchéité fabriquée selon la quatrième formule est adoptée, l'étanchéification du raccord de tige de puits de pétrole comprend :

la détermination, selon la quatrième formule, d'un jeu d'épaulement du raccord de tige de puits de pétrole, et la détermination de la structure d'étanchéité du raccord de tige de puits de pétrole sur la base du jeu d'épaulement de couple du raccord de tige de puits de pétrole, dans lequel la structure d'étanchéité comprend un raccord fileté femelle et un raccord fileté mâle ; et
l'agencement de la bague d'étanchéité dans le jeu d'épaulement de couple du raccord de tige de puits de pétrole pour étanchéifier le raccord de tige de puits de pétrole.

13. Procédé d'étanchéification d'un raccord de tige de puits de pétrole selon la revendication 9, dans lequel dans le cas où la bague d'étanchéité fabriquée selon la cinquième formule est adoptée, l'étanchéification du raccord de tige de puits de pétrole comprend :

la détermination de la structure d'étanchéité du raccord de tige de puits de pétrole sur la base d'une moitié de la distance entre des extrémités de deux raccords filetés mâles lorsqu'un raccord fileté femelle est serré sur les deux raccords filetés mâles selon la cinquième formule, dans lequel la structure d'étanchéité comprend le raccord fileté femelle et le raccord fileté mâle ; et

l'agencement de la bague d'étanchéité au niveau d'un jeu entre les extrémités des deux raccords filetés mâles après serrage du raccord fileté femelle sur les deux raccords filetés mâles, pour étanchéifier le raccord de tige de puits de pétrole.

**14.** Procédé de conception d'un raccord de tige de puits de pétrole, comprenant :
l'application du matériau réel, de la contrainte élastique de matériau de structure d'étanchéité, et de la largeur de contact de surface d'étanchéité qui sont obtenus par l'utilisation du procédé de détermination de paramètres de fabrication pour une structure d'étanchéité d'un raccord de tige de puits de pétrole selon l'une quelconque des revendications 1 à 7 pour concevoir la structure d'étanchéité du raccord de tige de puits de pétrole.

FIG. 1 (a)

FIG. 1 (b)

Determining a sealing surface contact compressive stress, a sealing structure material elastic strain, a sealing structure material strength and a sealing surface contact width of the oil well pipe according to a predefined rule that a tightness evaluation parameter of the oil well pipe is greater than or equal to a corresponding tightness safety margin ⟩ S1

Determining an actual material of the sealing structure of the oil well pipe connection, based on the sealing surface contact compressive stress, the sealing structure material elastic strain, and the sealing structure material strength ⟩ S2

Using the actual material and the sealing surface contact width as the manufacturing parameters for the sealing structure, determining a size of the sealing structure based on the elastic strain of the actual material and the sealing surface contact width and manufacturing the sealing structure by applying the actual material ⟩ S3

FIG. 2

FIG. 3

FIG. 4(a)

FIG. 4(b)

FIG. 4(c)

$D_{ps}$

FIG. 4 (d)

FIG. 5 (a)

h

FIG. 5 (b)

FIG. 5(c)

FIG. 5(d)

FIG. 5(e)

FIG. 6 (a)

FIG. 6 (b)

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103909386 A
- CN 106194052 A